(19)

Europäisches Patentamt

European Patent Office

Office européen des brevets

(11) **EP 4 524 819 A1**

(12) **EUROPEAN PATENT APPLICATION**
published in accordance with Art. 153(4) EPC

(43) Date of publication:
**19.03.2025   Bulletin 2025/12**

(21) Application number: **23815070.0**

(22) Date of filing: **25.05.2023**

(51) International Patent Classification (IPC):
**G06N 3/08** (2023.01)          **G06N 3/04** (2023.01)
**G06N 20/00** (2019.01)

(86) International application number:
**PCT/CN2023/096249**

(87) International publication number:
**WO 2023/231887 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **01.06.2022   CN 202210618700**

(71) Applicant: **Huawei Technologies Co., Ltd.
Shenzhen, Guangdong 518129 (CN)**

(72) Inventors:
• **LI, Yinchuan
  Shenzhen, Guangdong 518129 (CN)**
• **SHAO, Yunfeng
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **TENSOR-BASED CONTINUAL LEARNING METHOD AND DEVICE**

(57)   This application discloses a tensor-based continual learning method and apparatus. The method includes: obtaining input data, where the input data includes one or more of the following: a video, an image, a text, or speech; and inputting the input data into a first neural network to obtain a data processing result. The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. In training of an $(i+1)^{th}$ task, C tensor cores and/or D tensor layers are added to the first neural network, and parameters in the C tensor cores and/or parameters at the D tensor layers are updated. According to this application, an anti-forgetting capability of a model can be effectively improved, and an increase in a scale of the model is small, to effectively reduce storage and communication overheads.

```
┌────────────────────────────────────────────────────┐
│ Obtain input data, where the input data includes    │   S610
│ one or more of the following: a video, an image,     │
│ a text, or speech                                    │
└────────────────────────────────────────────────────┘
                        │
                        ▼
┌────────────────────────────────────────────────────┐
│ Input the input data into a first neural network to │
│ obtain a data processing result, where the first    │
│ neural network is obtained through training of m    │
│ tasks, and after training of an $i^{th}$ task ends, │
│ the neural network includes A tensor cores, the A   │
│ tensor cores are divided into B tensor layers, and  │   S620
│ each of the B tensor layers includes data of all of │
│ the A tensor cores in a same dimension; and after   │
│ training of an $(i+1)^{th}$ task ends, C tensor     │
│ cores and/or D tensor layers are added to the first │
│ neural network, and in the training of the          │
│ $(i+1)^{th}$ task, parameters in the C tensor cores │
│ and/or parameters at the D tensor layers are        │
│ updated, where m is a positive integer, and i is a  │
│ positive integer less than or equal to m–1          │
└────────────────────────────────────────────────────┘
```

FIG. 6

## Description

This application claims priority to Chinese Patent Application No. 202210618700.1, filed with the China National Intellectual Property Administration on June 1, 2022 and entitled "TENSOR-BASED CONTINUAL LEARNING METHOD AND APPARATUS", which is incorporated herein by reference in its entirety.

## TECHNICAL FIELD

This application relates to the field of artificial intelligence (Artificial Intelligence, AI) technologies in big data, and in particular, to a tensor-based continual learning method and apparatus.

## BACKGROUND

Artificial intelligence AI is a theory, a method, a technology, and an application system that simulate, extend, and expand human intelligence by using a digital computer or a machine controlled by a digital computer, to perceive an environment, obtain knowledge, and achieve an optimal result based on the knowledge. In other words, artificial intelligence is a branch of computer science and attempts to understand essence of intelligence and produce a new intelligent machine that can react in a manner similar to human intelligence. Artificial intelligence is to research design principles and implementation methods of various intelligent machines, so that the machines have perception, inference, and decision-making functions.

With rapid development of Internet technologies such as big data, artificial intelligence, and an Internet of things, various industries are gradually digitalized and intelligent to improve service efficiency and service quality. Interaction manners such as a digital human and a virtual human gradually emerge in various fields such as finance, e-commerce, healthcare, education, and multimedia.

Conventional machine learning (Machine Leaning, ML) requires training samples to be independent and identically distributed (Independent and Identically Distributed, IID) data. To achieve this objective, training data is usually randomly disordered. However, if a model processes continuous data whose distribution is changing, and is still trained based on a conventional method without any processing, catastrophic forgetting occurs because new data interferes with the model. The model adjusts a parameter learned by the model about old data to adapt to a new task. As a result, knowledge learned from the old data is forgotten.

Therefore, continual learning emerges. In an existing continual learning method, continual learning is mainly implemented through limitation of update of an existing model parameter or through adding of a new submodel in a process of training the new task.

However, the existing continual learning method has a poor anti-forgetting capability, or after a plurality of times of continual learning, a scale of the model is large, which increases storage and communication overheads.

## SUMMARY

Embodiments of this application provide a tensor-based continual learning method and apparatus, so that an anti-forgetting capability of a model can be effectively improved, and an increase in a scale of the model is small, to effectively reduce storage and communication overheads.

According to a first aspect, this application provides a tensor-based continual learning method. The method includes: obtaining input data, where the input data includes one or more of the following: a video, an image, a text, or speech; and inputting the input data into a first neural network to obtain a data processing result. The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. After training of an $(i+1)^{th}$ task ends, C tensor cores and/or D tensor layers are added to the first neural network. In the training of the $(i+1)^{th}$ task, parameters in the C tensor cores and/or parameters at the D tensor layers are updated. m is a positive integer, and i is a positive integer less than or equal to m-1.

In terms of technical effects, in a continual learning process (that is, a process in which a neural network that completes learning an old task learns a new task), a parameter in a newly added tensor core and/or a parameter at a newly added tensor layer are/is updated, and a parameter in an original tensor core may remain unchanged. That is, the neural network is updated in a dimension of the tensor core and/or a dimension of the tensor layer. This is different from a conventional technology in which an entire tensor in the neural network is directly updated (the tensor core is obtained by performing tensor decomposition on the tensor) when the new task is trained in that knowledge learned from a previous task can be effectively retained, and knowledge learned from the new task can also be stored by using the newly added tensor core and/or the newly added tensor layer, so that the neural network has a high-accuracy anti-forgetting capability.

In a feasible implementation, after the training of the $(i+1)^{th}$ task ends, a parameter in a part or all of the A tensor cores remains unchanged, or a parameter at a part or all of the B tensor layers remains unchanged.

In terms of technical effects, for two adjacent tasks, in a training process of a second task, a part or all of parameters in an existing tensor core/at an existing tensor layer in the neural network remain unchanged, so that in the continual learning process, the neural network still retains the knowledge learned from the previous task, and a structure and a scale of a model do not need to be greatly adjusted.

In a feasible implementation, the method further includes: after the training of the $i^{th}$ task ends, performing tensor combination on the A tensor cores to obtain one or more tensors; and before the training of the $(i+1)^{th}$ task is performed, performing tensor decomposition on the one or more tensors to obtain the A tensor cores.

In terms of technical effects, the neural network used for continual learning may be designed as a neural network that includes only the tensor and does not include the tensor core. In a training process of a task, tensor decomposition is first performed on the tensor, and then a parameter in a tensor core or at a tensor layer obtained through decomposition is more accurately updated. Similarly, the neural network may alternatively be designed as a neural network including the tensor core/tensor layer. In a training process of a task, tensor decomposition and tensor combination do not need to be performed. In other words, the neural network may be designed in different manners, and the method in this application can be applied to all the manners, which shows good universality.

In a feasible implementation, a training process of the $(i+1)^{th}$ task includes: training an $i^{th}$ backup tensor network by using an $(i+1)^{th}$ batch of datasets, to obtain a trained $i^{th}$ backup tensor network; and training the first neural network by using the $(i+1)^{th}$ batch of datasets. A loss function of the first neural network includes a degree of difference between an output of the first neural network and an output of a trained $j^{th}$ backup tensor network, or a loss function of the first neural network includes a degree of difference between a model parameter of the first neural network and a model parameter of a trained $j^{th}$ backup tensor network. j is equal to 1 to i-1, and j is a positive integer less than or equal to i-1.

In terms of technical effects, in a training process of the new task of the neural network, a trained backup tensor network in the previous task is used to constrain update of the neural network. This manner is combined with the update manner of the tensor core/tensor layer of the neural network in the foregoing embodiment, so that the neural network has a better anti-forgetting capability after the new task is trained.

In a feasible implementation, the first neural network is one of a plurality of neural networks, the plurality of neural networks are located on different user equipments, and the first neural network is located on a first user equipment. The method further includes: After training of each task ends, the first user equipment sends the model parameter of the first neural network to a server, so that the server updates a second neural network on the server based on a model parameter of each of the plurality of neural networks. The model parameter of the first neural network includes the tensor core included in the first neural network.

In terms of technical effects, the continual learning method in this application may be applied to a federated learning architecture. Parameters in neural networks are updated by using the continual learning method in the foregoing embodiment on different user equipments, so that a good anti-forgetting capability is maintained without a large change in a scale of the neural network. In addition, only a tensor core of a neural network on each user equipment is sent to a server end for model aggregation, so that communication overheads in a federated learning process can be effectively reduced.

In a feasible implementation, the task includes image recognition, target detection, image segmentation, or speech semantic recognition.

In terms of technical effects, the continual learning method in this application may be not limited by a task type, and may be applied to various types of application scenarios, which shows strong universality.

According to a second aspect, an embodiment of this application provides a tensor-based continual learning method. The method includes: obtaining input data, where the input data includes one or more of the following: a video, an image, a text, or speech; and inputting the input data into a first neural network to obtain a data processing result. The first neural network is obtained through training of m tasks. After training of an $i^{th}$ task ends, the neural network includes A tensor cores, the A tensor cores include B tensor layers, and each of the B tensor layers includes data of all of the A tensor cores in a same dimension. After training of an $(i+1)^{th}$ task ends, a parameter in a part or all of the A tensor cores remains unchanged, or a parameter at a part or all of the B tensor layers remains unchanged. m is a positive integer, and i is a positive integer less than or equal to m-1.

In a feasible implementation, after the training of the $(i+1)^{th}$ task ends, C tensor cores and/or D tensor layers are added to the first neural network. In the training of the $(i+1)^{th}$ task, parameters in the C tensor cores and/or parameters at the D tensor layers are updated.

In terms of technical effects, for technical effects of the foregoing embodiment, refer to descriptions of the corresponding embodiment in the first aspect. Details are not described herein again.

According to a third aspect, an embodiment of this application provides a tensor-based continual learning method. The method includes: receiving a plurality of model parameters sent by a plurality of user equipments respectively, where the plurality of user equipments include a first user equipment, and a model parameter sent by the first user equipment includes a tensor core included in a first neural network; and updating a second neural network based on the plurality of model parameters, and processing to-be-processed data based on an updated second neural network to obtain a data processing result, where the to-be-processed data includes one or more of the following: a picture, a video, speech, or a text. The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. After training of an $(i+1)^{th}$ task ends, C tensor cores and/or D tensor layers are added to the first neural network. In the training of the $(i+1)^{th}$ task, parameters in the C tensor cores and/or parameters at the D tensor layers are updated. m is a positive integer, and i is a positive integer less than or equal to m-1.

In a feasible implementation, after the training of the $(i+1)^{th}$ task ends, a parameter in a part or all of the A tensor cores remains unchanged, or a parameter at a part or all of the B tensor layers remains unchanged.

In terms of technical effects, for technical effects of the foregoing embodiment, refer to descriptions of the corresponding embodiment in the first aspect. Details are not described herein again.

According to a fourth aspect, an embodiment of this application provides a tensor-based continual learning method. The method includes: receiving a plurality of model parameters sent by a plurality of user equipments respectively, where the plurality of user equipments include a first user equipment, and a model parameter sent by the first user equipment includes a tensor core included in a first neural network; and updating a second neural network based on the plurality of model parameters, and processing to-be-processed data based on an updated second neural network to obtain a data processing result, where the to-be-processed data includes one or more of the following: a picture, a video, speech, or a text. The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. After training of an $(i+1)^{th}$ task ends, a parameter in a part or all of the A tensor cores remains unchanged, or a parameter at a part or all of the B tensor layers remains unchanged. m is a positive integer, and i is a positive integer less than or equal to m-1.

In a feasible implementation, after the training of the $(i+1)^{th}$ task ends, C tensor cores and/or D tensor layers are added to the first neural network. In the training of the $(i+1)^{th}$ task, parameters in the C tensor cores and/or parameters at the D tensor layers are updated.

In terms of technical effects, for technical effects of the foregoing embodiment, refer to descriptions of the corresponding embodiment in the first aspect. Details are not described herein again.

According to a fifth aspect, an embodiment of this application provides a tensor-based continual learning apparatus. The apparatus includes: an obtaining unit, configured to obtain input data, where the input data includes one or more of the following: a video, an image, a text, or speech; and a processing unit, configured to process the input data based on a first neural network to obtain a data processing result. The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. After training of an $(i+1)^{th}$ task ends, C tensor cores and/or D tensor layers are added to the first neural network. In the training of the $(i+1)^{th}$ task, parameters in the C tensor cores and/or parameters at the D tensor layers are updated. m is a positive integer, and i is a positive integer less than or equal to m-1.

In a feasible implementation, after the training of the $(i+1)^{th}$ task ends, a parameter in a part or all of the A tensor cores remains unchanged, or a parameter at a part or all of the B tensor layers remains unchanged.

In a feasible implementation, the processing unit is further configured to: after the training of the $i^{th}$ task ends, perform tensor combination on the A tensor cores to obtain one or more tensors; and before performing the training of the $(i+1)^{th}$ task, perform tensor decomposition on the one or more tensors to obtain the A tensor cores.

In a feasible implementation, in a training process of the $(i+1)^{th}$ task, the processing unit is specifically configured to: train an $i^{th}$ backup tensor network by using an $(i+1)^{th}$ batch of datasets, to obtain a trained $i^{th}$ backup tensor network; and train the first neural network by using the $(i+1)^{th}$ batch of datasets. A loss function of the first neural network includes a degree of difference between an output of the first neural network and an output of a trained $j^{th}$ backup tensor network, or a loss function of the first neural network includes a degree of difference between a model parameter of the first neural network and a model parameter of a trained $j^{th}$ backup tensor network. j is equal to 1 to i-1, and j is a positive integer less than or equal to i-1.

In a feasible implementation, the first neural network is one of a plurality of neural networks, the plurality of neural networks are located on different user equipments, the first neural network is located on a first user equipment. The apparatus further includes: a sending unit, configured by the first user equipment to: after training of each task ends, send the model parameter of the first neural network to a server, so that the server updates a second neural network on the server based on a model parameter of each of the plurality of neural networks. The model parameter of the first neural network includes the tensor core included in the first neural network.

In a feasible implementation, the task includes image recognition, target detection, image segmentation, or speech semantic recognition.

According to a sixth aspect, an embodiment of this application provides a tensor-based continual learning apparatus. The apparatus includes: an obtaining unit, configured to obtain input data, where the input data includes one or more of the following: a video, an image, a text, or speech; and a processing unit, configured to input the input data into a first neural network to obtain a data processing result. The first neural network is obtained through training of m tasks. After training of an $i^{th}$ task ends, the neural network includes A tensor cores, the A tensor cores include B tensor layers, and each of the B tensor layers includes data of all of the A tensor cores in a same dimension. After training of an $(i+1)^{th}$ task ends, a parameter in a part or all of the A tensor cores remains unchanged, or a parameter at a part of the B tensor layers remains unchanged. m is a positive integer, and i is a positive integer less than or equal to m-1.

In a feasible implementation, after the training of the $(i+1)^{th}$ task ends, C tensor cores and/or D tensor layers are added to the first neural network. In the training of the $(i+1)^{th}$ task, parameters in the C tensor cores and/or parameters at the D tensor layers are updated.

According to a seventh aspect, an embodiment of this application provides a tensor-based continual learning apparatus. The apparatus includes: a receiving unit, configured to receive a plurality of model parameters sent by a plurality of user equipments respectively, where the plurality of user equipments include a first user equipment, and a model parameter sent by the first user equipment includes a tensor core included in a first neural network; and a processing unit, configured to: update a second neural network based on the plurality of model parameters, and process to-be-processed data based on an updated second neural network to obtain a data processing result, where the to-be-processed data includes one or more of the following: a picture, a video, speech, or a text. The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. After training of an $(i+1)^{th}$ task ends, C tensor cores and/or D tensor layers are added to the first neural network. In the training of the $(i+1)^{th}$ task, parameters in the C tensor cores and/or parameters at the D tensor layers are updated. m is a positive integer, and i is a positive integer less than or equal to m-1.

In a feasible implementation, after the training of the $(i+1)^{th}$ task ends, a parameter in a part or all of the A tensor cores remains unchanged, or a parameter at a part or all of the B tensor layers remains unchanged.

According to an eighth aspect, an embodiment of this application provides a tensor-based continual learning apparatus. The apparatus includes: a receiving unit, configured to receive a plurality of model parameters sent by a plurality of user equipments respectively, where the plurality of user equipments include a first user equipment, and a model parameter sent by the first user equipment includes a tensor core included in a first neural network; and a processing unit, configured to: update a second neural network based on the plurality of model parameters, and process to-be-processed data based on an updated second neural network to obtain a data processing result, where the to-be-processed data includes one or more of the following: a picture, a video, speech, or a text. The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. After training of an $(i+1)^{th}$ task ends, a parameter in a part or all of the A tensor cores remains unchanged, or a parameter at a part of the B tensor layers remains unchanged. m is a positive integer, and i is a positive integer less than or equal to m-1.

In a feasible implementation, after the training of the $(i+1)^{th}$ task ends, C tensor cores and/or D tensor layers are added to the first neural network. In the training of the $(i+1)^{th}$ task, parameters in the C tensor cores and/or parameters at the D tensor layers are updated.

According to a ninth aspect, an embodiment of this application provides an electronic device. The electronic device includes at least one processor, memory, and interface circuit. The memory, the interface circuit, and the at least one processor are interconnected through a line. The at least one memory stores instructions. When the instructions are executed by the processor, the method according to any one of the first aspect to the fourth aspect is implemented.

According to a tenth aspect, an embodiment of this application provides a computer-readable storage medium. The computer-readable storage medium stores a computer program. When the computer program is executed, the method according to any one of the first aspect to the fourth aspect is implemented.

According to an eleventh aspect, an embodiment of this application provides a computer program. The computer program includes instructions. When the computer program is executed, the method according to any one of the first aspect to the fourth aspect is implemented.

## BRIEF DESCRIPTION OF DRAWINGS

The following describes accompanying drawings used in embodiments of this application.

FIG. 1a to FIG. 1c are diagrams of several system architectures available for performing a tensor-based continual learning method in this application according to an embodiment of this application;
FIG. 2 is a diagram of another system architecture according to an embodiment of this application;
FIG. 3 is a diagram of a structure of a convolutional neural network according to an embodiment of this application;
FIG. 4 is a diagram of a structure of another convolutional neural network according to an embodiment of this application;

FIG. 5 is a diagram of a hardware structure of a chip according to an embodiment of this application;

FIG. 6 is a schematic flowchart of a tensor-based continual learning method according to an embodiment of this application;

FIG. 7 is a diagram of a relationship between a tensor core and a tensor layer according to an embodiment of this application;

FIG. 8a to FIG. 8c are diagrams of change manners of a tensor structure according to an embodiment of this application;

FIG. 9a and FIG. 9b are diagrams of update manners of a tensor structure according to an embodiment of this application;

FIG. 10 shows a structure of a first neural network according to an embodiment of this application;

FIG. 11 is a diagram of an alternate training process according to an embodiment of this application;

FIG. 12 is a diagram of a continual learning process based on a federated learning architecture according to an embodiment of this application;

FIG. 13 is a schematic flowchart of another continual learning method according to an embodiment of this application;

FIG. 14 is a schematic flowchart of still another continual learning method according to an embodiment of this application;

FIG. 15 is a schematic flowchart of yet another continual learning method according to an embodiment of this application;

FIG. 16 is a diagram of a structure of a continual learning apparatus according to an embodiment of this application;

FIG. 17 is a diagram of a structure of another continual learning apparatus according to an embodiment of this application; and

FIG. 18 is a diagram of a structure of an electronic device according to an embodiment of this application.

## DESCRIPTION OF EMBODIMENTS

The following describes embodiments of this application with reference to the accompanying drawings in embodiments of this application. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

In this specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. An "embodiment" mentioned in this specification indicates that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. It is explicitly and implicitly understood by persons skilled in the art that embodiments described in this specification may be combined with another embodiment.

First, professional terms in this application are correspondingly described and described.

(1) Tensor (Tensor): a multidimensional array. A scalar may be considered as a zerodimensional tensor, a vector may be considered as a one-dimensional tensor, and a matrix may be considered as a two-dimensional tensor. In an actual use process, data is usually referred to as a tensor only when a dimension of the data is greater than a third order.

(2) Tensor decomposition: Tensor decomposition is essentially a higher-order generalization of matrix decomposition. Tensor decomposition is usually used for dimensionality reduction processing, missing data imputation (or referred to as "sparse data imputation"), latent relationship discovery, and the like. Common tensor decomposition methods include CP decomposition, Tucker decomposition, t-SVD decomposition, and the like.

(3) Tensor core (Tensor core): A factor matrix, of an original tensor, obtained through tensor decomposition is the tensor core.

(4) Tensor layer: a dataset of different tensor cores in a same dimension.

(5) Federated learning (Federated Learning): During machine learning, participants may use data from other parties for joint modeling. All parties do not need to share data resources. That is, data joint training is performed to establish a shared machine learning model when data remains local.

(6) Continual learning (Continual Learning/Life-Long Learning): When a new task is learned, experience of a previous task can be used to quickly learn the new task, and memory of the old task is kept at the same time. Continual learning is deep learning with an anti-forgetting capability.

The following describes, by using examples, two application scenarios to which a continual learning method in this application is applicable. It should be understood that the two application scenarios do not constitute a limitation on a scenario scope to which the method in this application is applicable.

(1) Machine vision (Computer Vision, CV): The continual learning method in this application may be used to train models of various tasks (for example, target detection, image segmentation, and image classification) in the machine vision field, and then perform inference by using a trained model. The trained model may learn knowledge from training data of a new task, and retain knowledge of a previous task.
(2) Natural language processing (Natural Language Processing, NLP): The continual learning method in this application may be used to train models of various tasks (for example, scenarios such as speech semantic recognition and virtual human video generation) in the natural language processing field, and then perform inference by using a trained model. The trained model may learn knowledge from training data of a new task, and retain knowledge of a previous task.

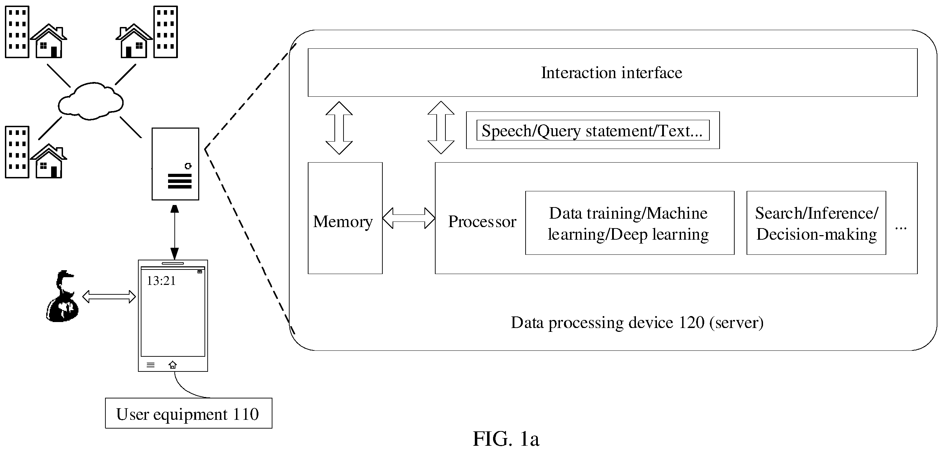

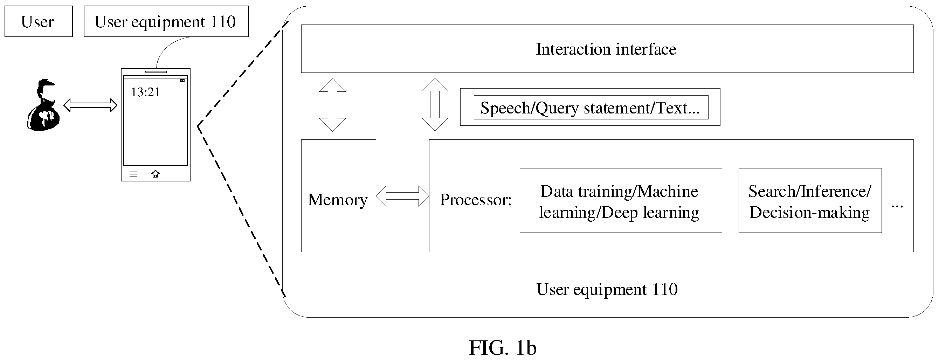

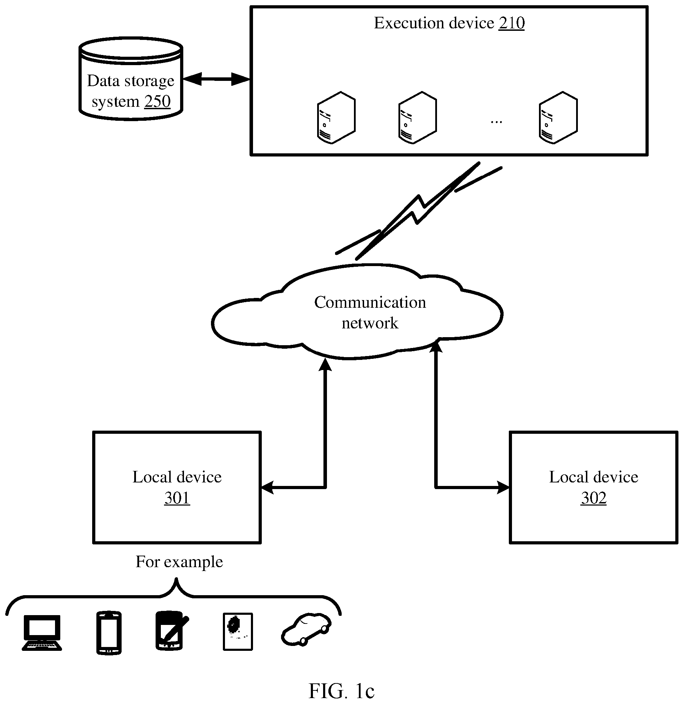

FIG. 1a to FIG. 1c are diagrams of several system architectures available for performing a tensor-based continual learning method in this application according to an embodiment of this application.
A system shown in FIG. 1a includes a user equipment 110 and a data processing device 120 (server). The user equipment 110 includes an intelligent terminal such as a mobile phone, a personal computer, a vehicle-mounted terminal, or an information processing center. The user equipment 110 is an initiator of data processing, and a user usually initiates a request by using the user equipment 110.
The data processing device 120 may be a device or a server that has a data processing function, for example, a cloud server, a network server, an application server, and a management server. The data processing device 120 receives a request such as a query statement, speech, or a text from the user equipment 110 through an interaction interface; performs data processing in a manner of machine learning, deep learning, search, inference, decision-making, or the like by using a memory storing data and a processor processing data, to perform the continual learning method in this application; performs inference by using a neural network obtained through training according to the continual learning method; and finally transfers a data processing result obtained through inference to the user equipment 110 through a network. The memory may be a general name, including a local storage and a database storing historical data. The database may be in the data processing device, or may be in another network server.
A user equipment 110 in a system shown in FIG. 1b is directly used as a data processing device, and directly receives an input from a user. The input is directly processed by hardware of the user equipment 110. A specific process is similar to that in FIG. 1a. Refer to the foregoing descriptions. Details are not described herein again.
A system shown in FIG. 1c includes at least one local device (such as a local device 301 and a local device 302), an execution device 210, and a data storage system 250. The local device is equivalent to the user equipment 110 in FIG. 1a and FIG. 1b, the execution device 210 is equivalent to the data processing device 120, and the data storage system 250 may be integrated into the execution device 210, or may be disposed in a cloud or another network server.

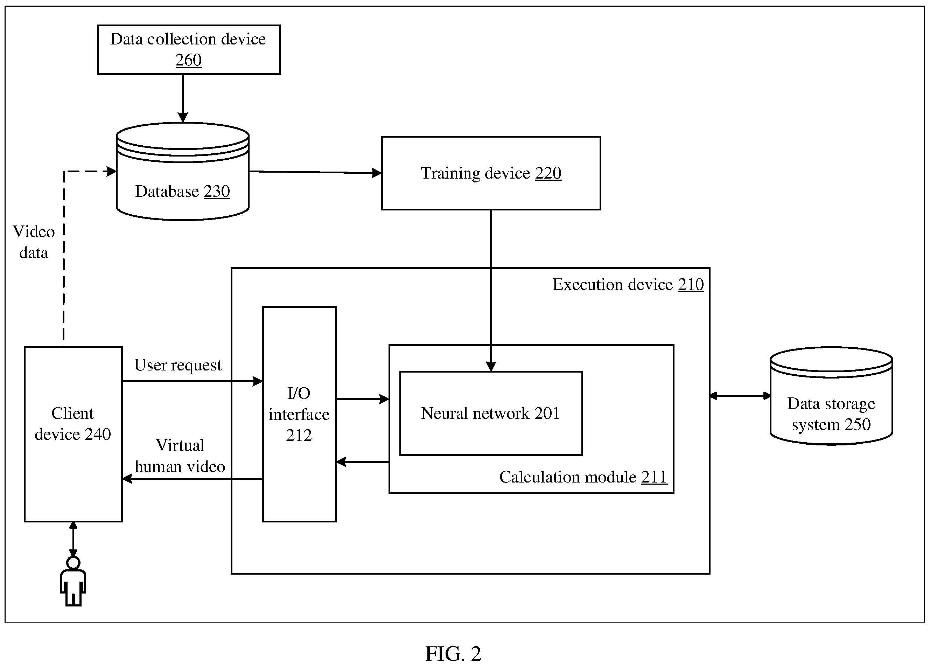

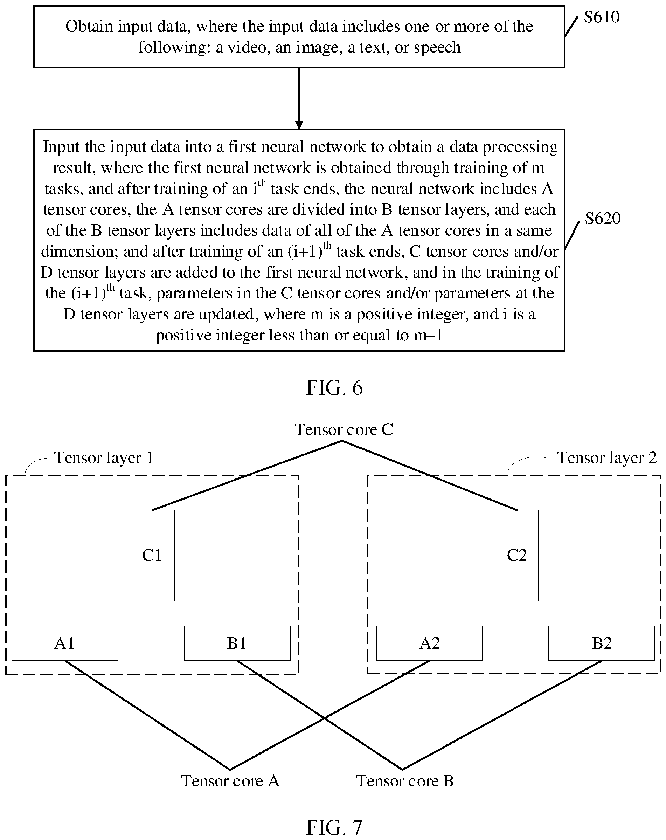

FIG. 2 is a diagram of another system architecture according to an embodiment of this application. As shown in FIG. 2, a data collection device 260 is configured to collect data such as speech, a text, an image, and a video, and store the data in a database 230. A training device 220 performs training based on image and text data maintained in the database 230, to obtain a neural network 201 (namely, a first neural network in this application). The following describes in detail a process in which the training device 220 performs continual learning on the neural network 201 in a method embodiment shown in FIG. 6. The trained neural network 201 can process one or more of the following input data: a text, speech, an image, and a video, and generate a data processing result corresponding to a target task (such as target detection, image recognition, or speech semantic recognition). The input data is generated based on a user request sent by a client device 240.
FIG. 2 is also a diagram of functional modules in an execution process of a continual learning method. When FIG. 2 corresponds to the systems in FIG. 1a to FIG. 1c (namely, diagrams of actual application scenarios), the client device 240 may be the user equipment 110 or the local device in FIG. 1a to FIG. 1c. When the user equipment 110 has a strong data processing capability, the execution device 210 and the data storage system 250 may be integrated into the user equipment 110 or the local device. In some embodiments, the execution device 210 and the data storage system 250 may alternatively be integrated into the data processing device 120 in FIG. 1a. The database 230, the training device 220, and the data collection device 260 may be correspondingly integrated into the data processing device 120 in FIG. 1a, or may be disposed in a cloud or another server in a network. This is not limited in this application.
The data collection device 260 may be a terminal device or an input/output interface of the server or the cloud, and is configured to obtain a query statement and return an interaction layer (interface) of a reply statement.

The following briefly describes training and an inference principle of a deep learning model in this application.

An architecture of the deep learning model may be a deep neural network. Work at each layer of the deep neural network may be described by using a mathematical expression $\vec{y} = a(W \bullet \vec{x} + b)$. From a physical perspective, work at each layer of the deep neural network may be understood as performing transformation from input space to output space (that is, from row space of a matrix to column space of the matrix) through five operations on the input space (a set of input vectors). The five operations include: 1. dimensionality increase/dimensionality reduction; 2. scaling up/scaling down; 3. rotation; 4. translation; and 5. "bending". The operations 1, 2, and 3 are performed by $W \bullet x$, the operation 4 is performed by $+b$, and the operation 5 is performed by $a()$. The word "space" is used herein for expression because a classified object is not a single thing, but a type of thing. Space is a set of all individuals of this type of thing. $W$ is a weight vector, and each value in the vector represents a weight value of a neuron at a layer of the neural network. The vector $W$ determines the spatial transformation from the input space to the output space described above. That is, a weight $W$ of each layer controls how to transform space. An objective of training the deep neural network is to finally obtain a weight matrix of all layers of a trained neural network (a weight matrix formed by vectors $W$ of a plurality of layers). Therefore, a training process of the neural network is essentially learning a manner of controlling spatial transformation, and more specifically, learning the weight matrix.

Because it is expected that an output of the deep neural network is close, to a greatest extent, to a value that is actually expected to be predicted, a current predicted value of the network may be compared with a target value that is actually expected, and then a weight vector of each layer of the neural network is updated based on a difference between the current predicted value and the target value (certainly, there is usually an initialization process before first update, that is, a parameter is preconfigured for each layer of the deep neural network). For example, if the predicted value of the network is large, the weight vector is adjusted to decrease the predicted value. Adjustment is continuously performed, until the neural network can predict the target value that is actually expected. Therefore, "how to obtain, through comparison, the difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network becomes a process of minimizing the loss.

In FIG. 2, the neural network 201 obtained by the training device 220 may be applied to different systems or devices. The execution device 210 is configured with an I/O interface 212, and exchanges data with an external device. A "user" may input the data, that is, the user request, including user speech or text information input by the user, or an image or video information used for input, or the like to the I/O interface 212 by using the client device 240.

The execution device 210 may invoke data, code, and the like in the data storage system 250, or may store data, instructions, and the like in the data storage system 250.

The calculation module 211 processes the input data (that is, the user request) by using the neural network 201, to generate the data processing result corresponding to the target task.

Finally, the I/O interface 212 returns the data processing result to the client device 240, and presents the data processing result to the user on the client device 240.

Further, for different scenario requirements, the training device 220 may obtain, through training based on different tasks, a neural network 201 applicable to a new task, and maintain a compatibility processing capability for an old task, to provide a better result for the user.

In a case shown in FIG. 2, the user may manually specify the data to be input to the execution device 210, for example, may perform an operation on an interface provided by the I/O interface 212. In another case, the client device 240 may automatically input the data to the I/O interface 212 and obtain the result. If the client device 240 needs to obtain permission of the user for automatically inputting the data, the user may set corresponding permission in the client device 240. The user may view, on the client device 240, the result output by the execution device 210. Specifically, the result may be presented in a form of displaying, sound, action, or the like. The client device 240 may alternatively be used as a data collection end to store collected video, image, speech, and text data in the database 230 for use in a training process.

It should be noted that, FIG. 2 is merely a diagram of a system architecture according to an embodiment of the present invention. A location relationship between a device, a component, a module, and the like shown in FIG. 2 constitutes no limitation. For example, in FIG. 2, the data storage system 250 is an external memory relative to the execution device 210. In another case, the data storage system 250 may be alternatively configured in the execution device 210.

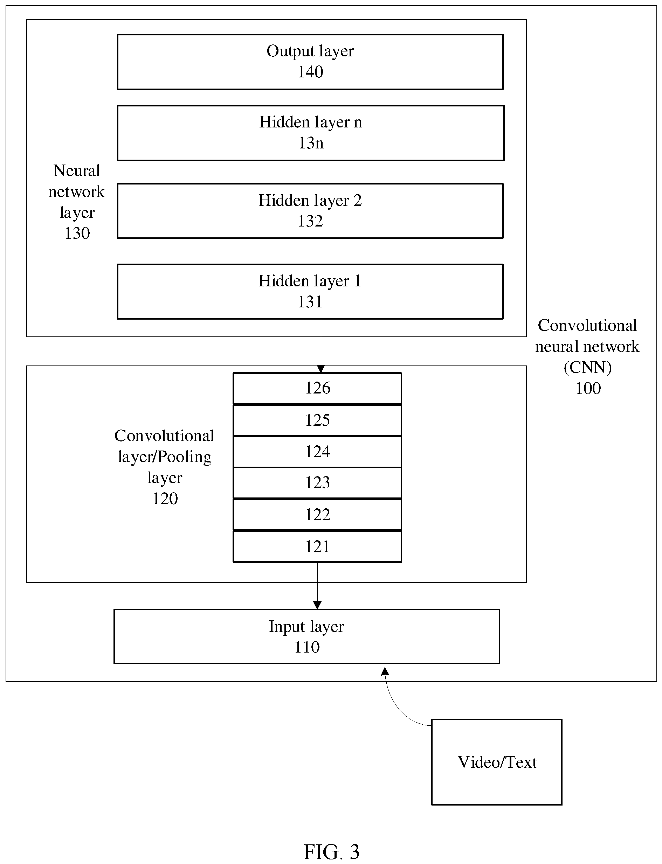

FIG. 3 is a diagram of a structure of a convolutional neural network according to an embodiment of this application, and is an example of representing a related internal structure of a neural network in this application, but does not constitute a limitation.

The convolutional neural network (convolutional neural network, CNN) is a deep neural network with a convolutional structure, and is a deep learning (deep learning) architecture. The deep learning architecture means performing multi-level learning at different abstract levels according to a machine learning algorithm. As a deep learning architecture, the CNN is a feed-forward (feed-forward) artificial neural network, and each neuron in the feed-forward artificial neural network responds to an overlapping area in images input into the neuron.

As shown in FIG. 3, a convolutional neural network (CNN) 100 may include an input layer 110, a convolutional layer/pooling layer 120, where the pooling layer is optional, and a neural network layer 130.

Convolutional layer:

As shown in FIG. 3, the convolutional layer/pooling layer 120 may include layers 121 to 126 in an example. For example, in an implementation, the layer 121 is a convolutional layer, a layer 122 is a pooling layer, a layer 123 is a convolutional layer, a layer 124 is a pooling layer, a layer 125 is a convolutional layer, and a layer 126 is a pooling layer. In another implementation, the layers 121 and 122 are convolutional layers, the layer 123 is a pooling layer, the layers 124 and 125 are convolutional layers, and the layer 126 is a pooling layer. That is, an output of a convolutional layer may be used as an input of a subsequent pooling layer, or may be used as an input of another convolutional layer to continue a convolution operation.

The convolutional layer 121 is used as an example. The convolutional layer 121 may include a plurality of convolution operators. The convolution operator is also referred to as a core. In this application, the convolution operator functions as a filter that extracts specific information from input speech or semantic information. The convolution operator may be a weight matrix essentially, and the weight matrix is usually predefined.

In actual application, weight values in these weight matrices need to be obtained through massive training. The weight matrices that are formed based on the weight values obtained through training may be used to extract information from an input video, an input image, input speech, or an input text, to help the convolutional neural network 100 perform correct prediction.

When the convolutional neural network 100 includes a plurality of convolutional layers, a large quantity of general features are usually extracted at an initial convolutional layer (for example, 121). The general feature may be also referred to as a low-level feature. As a depth of the convolutional neural network 100 increases, a feature extracted at a more subsequent convolutional layer (for example, 125) is more complex, for example, high-level image and semantic features. A feature with higher semantics is more applicable to a to-be-resolved problem.

Pooling layer:

A quantity of training parameters often needs to be reduced. Therefore, a pooling layer usually needs to be periodically introduced after a convolutional layer. To be specific, for the layers 121 to 126 exemplified by 120 in FIG. 3, one convolutional layer may be followed by one pooling layer, or a plurality of convolutional layers may be followed by one or more pooling layers. In natural language data processing, a sole objective of the pooling layer is to reduce a space size of data.

Neural network layer 130:

After processing is performed at the convolutional layer/pooling layer 120, the convolutional neural network 100 still cannot output required output information, because as described above, the convolutional layer/pooling layer 120 performs only feature extraction and reduces parameters brought by the input data. However, to generate final output information (required class information or other related information), the convolutional neural network 100 needs to use the neural network layer 130 to generate one or a group of outputs of a quantity of required classes. Therefore, the neural network layer 130 may include a plurality of hidden layers (131, 132, ..., and 13n shown in FIG. 3) and an output layer 140. Parameters included in the plurality of hidden layers may be obtained through pre-training based on related training data of a specific task type. For example, the task type may include speech or semantic recognition, classification, generation, or the like.

The plurality of hidden layers included in the neural network layer 130 are followed by the output layer 140, namely, a last layer of the entire convolutional neural network 100. The output layer 140 has a loss function similar to a categorical cross entropy, and the loss function is specifically used to calculate a prediction error. Once forward propagation (for example, propagation from 110 to 140 in FIG. 3 is the forward propagation) of the entire convolutional neural network 100 is completed, back propagation (for example, propagation from 140 to 110 in FIG. 3 is the back propagation) is started to update weight values and deviations of the layers mentioned above, to reduce a loss of the convolutional neural network 100 and an error between a result output by the convolutional neural network 100 through the output layer and an ideal result.

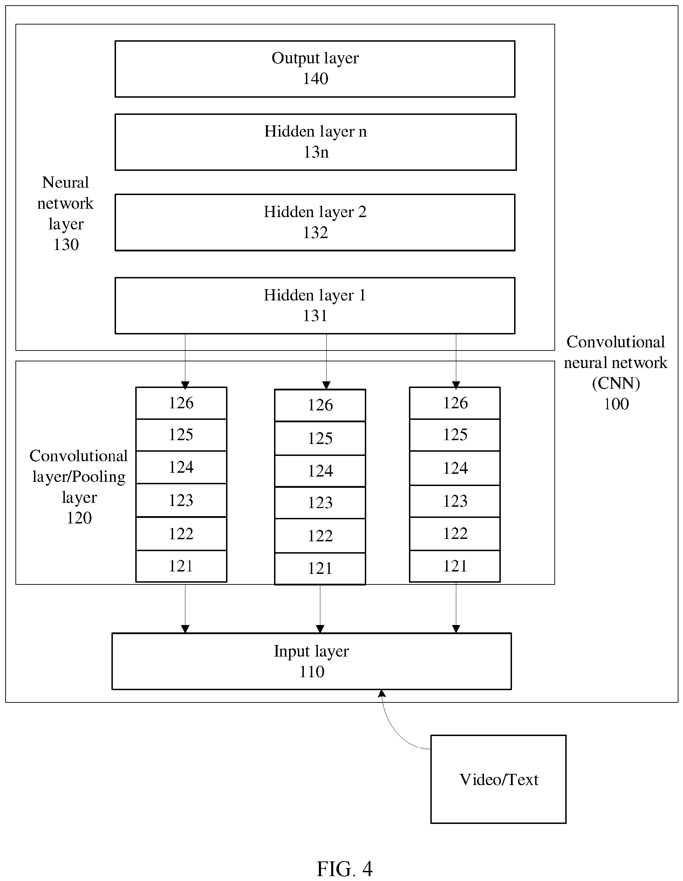

It should be noted that the convolutional neural network 100 shown in FIG. 3 is merely used as an example of a convolutional neural network. In a specific application, the convolutional neural network may alternatively exist in a form of another network model, for example, a network model in which a plurality of convolutional layers/pooling layers are parallel as shown in FIG. 4, and extracted features are all inputs to the neural network layer 130 for processing.

In this solution, a first neural network of the structures shown in FIG. 3 and FIG. 4 may perform task training in a continual learning manner in this application, and learn knowledge in a new task while retaining knowledge learned from an old task, so that the first neural network has a good anti-forgetting capability, and can be applied to different task inference, such as image recognition, target detection, and speech semantic recognition.

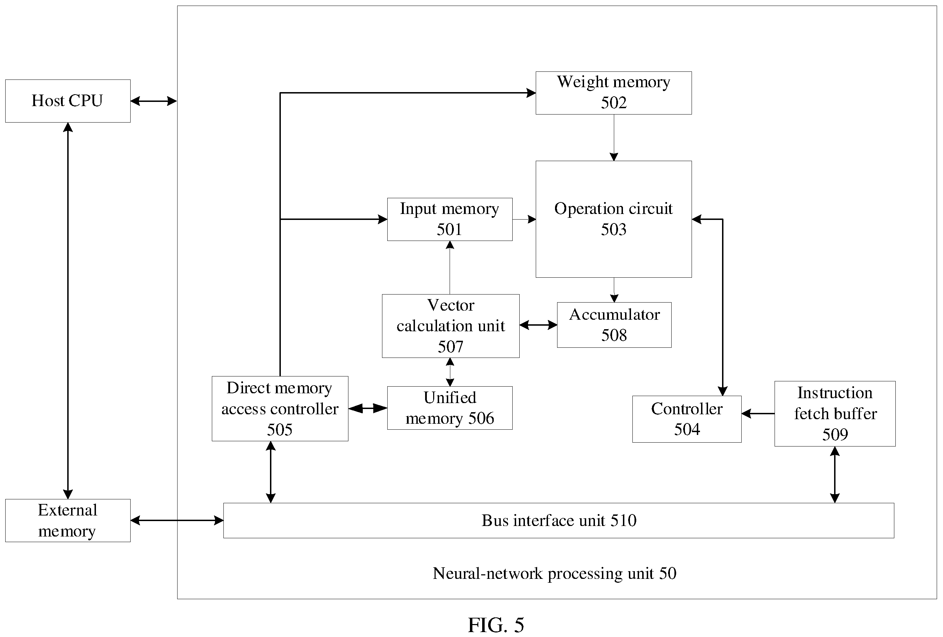

FIG. 5 is a diagram of a hardware structure of a chip according to an embodiment of this application. As shown in FIG. 5, a neural-network processing unit (neural-network processing unit, NPU) 50 is mounted to a host CPU (Host CPU) as a coprocessor, and the host CPU allocates a task. A core part of the NPU is an operation circuit 503, and a controller 504 controls the operation circuit 503 to extract data in a memory (a weight memory or an input memory) and perform an operation.

In some implementations, the operation circuit 503 includes a plurality of processing units (process engines, PEs) inside. In some implementations, the operation circuit 503 is a two-dimensional systolic array. The operation circuit 503 may alternatively be a one-dimensional systolic array or another electronic circuit capable of performing mathematical operations such as multiplication and addition. In some implementations, the operation circuit 503 is a generalpurpose matrix processor.

For example, it is assumed that there is an input matrix A, a weight matrix B, and an output matrix C. The operation circuit fetches, from the weight memory 502, data corresponding to the matrix B, and buffers the data on each PE in the operation circuit. The operation circuit fetches data of the matrix A from input memory 501, and performs a matrix operation with the matrix B. A partial result or a final result of an obtained matrix is stored in an accumulator (accumulator) 508.

A vector calculation unit 507 may perform further processing of vector multiplication, vector addition, an exponential operation, a logarithmic operation, magnitude comparison, or the like on an output of the operation circuit. For example, the vector calculation unit 507 may be configured to perform network calculation, such as pooling (Pooling), batch normalization (Batch Normalization), or local response normalization (Local Response Normalization), at a nonconvolutional/non-FC layer in a neural network.

In some implementations, the vector calculation unit 507 can save a processed output vector to a unified memory 506. For example, the vector calculation unit 507 may apply a nonlinear function to the output of the operation circuit 503, for example, a vector of an accumulated value, to generate an activation value. In some implementations, the vector calculation unit 507 generates a normalized value, a merge value, or both a normalized value and a merge value. In some implementations, the processed output vector can be used as activation input to the operation circuit 503, for example, used at a subsequent layer in the neural network.

The unified memory 506 is configured to store input data and output data.

A direct memory access controller (direct memory access controller, DMAC) 505 transfers input data in an external memory to the input memory 501 and/or the unified memory 506, stores weight data in the external memory in the weight memory 502, and stores data in the unified memory 506 in the external memory.

A bus interface unit (bus interface unit, BIU) 510 is configured to implement interaction between the host CPU, the DMAC, and an instruction fetch buffer 509 through a bus.

The instruction fetch buffer (instruction fetch buffer) 509 connected to the controller 504 is configured to store instructions used by the controller 504.

The controller 504 is configured to invoke the instructions buffered in the instruction fetch buffer 509, to control a working process of an operation accelerator.

Usually, the unified memory 506, the input memory 501, the weight memory 502, and the instruction fetch buffer 509 each are an on-chip (on-chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

FIG. 6 is a schematic flowchart of a tensor-based continual learning method according to an embodiment of this application. As shown in FIG. 6, the method includes step S610 and step S620.

Step S610: Obtain input data, where the input data includes one or more of the following: a video, an image, a text, or speech.

Specifically, the input data obtained in the foregoing step includes but is not limited to data that may be processed by using a neural network, such as a video, an image, a text, or speech. This is not exhaustive in this application.

Step S620: Input the input data into a first neural network to obtain a data processing result. The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. After training of an $(i+1)^{th}$ task ends, C tensor cores and/or D tensor layers are added to the first neural network. In the training of the $(i+1)^{th}$ task, parameters in the C tensor cores and/or parameters at the D tensor layers are updated. m is a positive integer, and i is a positive integer less than or equal to m-1.

A, B, C, and D are positive integers.

Specifically, the input data input into the first neural network may be one or more of the following: a video, an image, a text, speech, or other data that may be processed by using the neural network.

Specifically, each tensor core may include a plurality of levels, and each level includes at least one dimension. Each tensor layer includes data of all of tensor cores in a same dimension.

For example, if the tensor core is a 7*3*4 matrix, the tensor core includes three levels. A first level includes seven dimensions, a second level includes three dimensions, and a third level includes four dimensions.

The following describes in detail a specific relationship between a tensor core and a tensor layer with reference to an example in FIG. 7. FIG. 7 may be used as a specific example of the relationship between the tensor core and the tensor layer obtained through tensor decomposition.

In FIG. 7, after tensor decomposition is performed on a tensor, three tensor cores are obtained: a tensor core A, a tensor core B, and a tensor core C. The tensor core A may be divided into data in two dimensions at a specific level: A1 and A2. The tensor core B may be divided into data in two dimensions at this level: B1 and B2. The tensor core C may be divided into data in two dimensions at this level: C1 and C2. For the foregoing three tensor cores, data of the three tensor cores in a same dimension forms a tensor layer. As shown in FIG. 7, the three tensor cores may be divided into two tensor layers: a tensor layer 1 and a tensor layer 2. The tensor layer 1 includes the data A1, B1, and C1, and the tensor layer 2 includes the data A2, B2, and C2.

For example, the tensor cores A, B, and C each are a 5*4*2 matrix. A first level of the tensor cores A, B, and C includes five dimensions, a second level of the tensor cores A, B, and C includes three dimensions, and a third level of the tensor cores A, B, and C includes two dimensions. In this case, at the third level, the three tensor cores may be divided into two tensor layers, and each tensor layer includes data of all the tensor cores in one dimension at the third level, that is, a 5*4*1 matrix.

It should be understood that FIG. 7 is merely the specific example used to describe the relationship between the tensor core and the tensor layer in this application, and does not constitute a limitation on a quantity of tensor cores and a quantity of tensor layers.

For any two adjacent tasks (the i$^{th}$ task and the (i+1)$^{th}$ task are used as an example) in the foregoing m tasks, the tensor layer and/or the tensor core are/is added to the first neural network in a training process of the (i+1)$^{th}$ task, and the parameter at the added tensor layer and/or the parameter in the added tensor core are/is updated, to learn new knowledge from the training process of the (i+1)$^{th}$ task. That is, the knowledge learned from the (i+1)$^{th}$ task is stored by using the newly added tensor core/tensor layer, to ensure a continual learning capability of the first neural network.

Specifically, in the training process of the (i+1)$^{th}$ task, a tensor structure in the first neural network is changed in three manners: (1) adding at least one tensor core; (2) adding at least one tensor layer; and (3) adding at least one tensor core and at least one tensor layer.

Further, the adding the C tensor cores and/or the D tensor layers in the training process of the (i+1)$^{th}$ task specifically includes three manners: (1) adding the C tensor cores in the training process of the (i+1)$^{th}$ task; (2) adding the D tensor layers in the training process of the (i+1)$^{th}$ task; and (3) adding the C tensor cores and the D tensor layers in the training process of the (i+1)$^{th}$ task. C and D are positive integers.

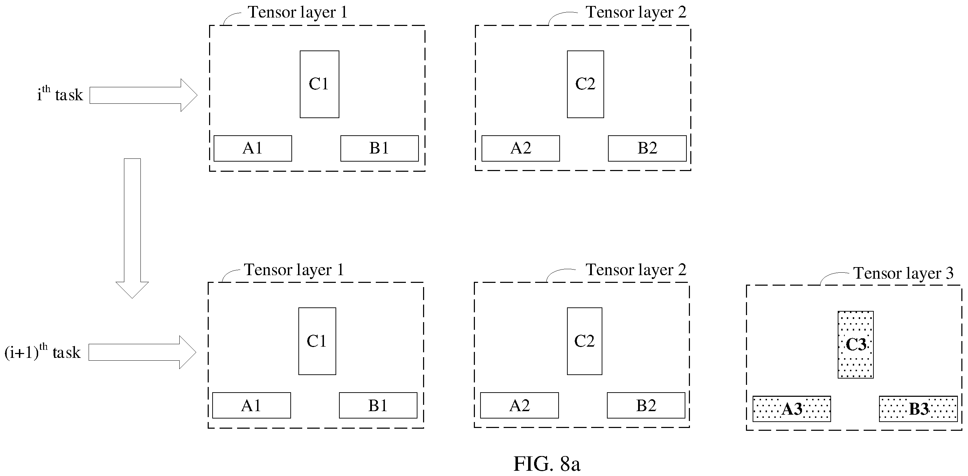

For example, for the three manners of changing the tensor structure in the first neural network, specifically refer to three examples shown in FIG. 8a to FIG. 8c.

FIG. 8a corresponds to the first manner. After the training of the i$^{th}$ task ends, the first neural network includes three tensor cores and two tensor layers. In the training process of the (i+1)$^{th}$ task, one tensor layer (A3, and B3+C3) is added, and a parameter at the added tensor layer is updated, as shown by a shadow part in FIG. 8a.

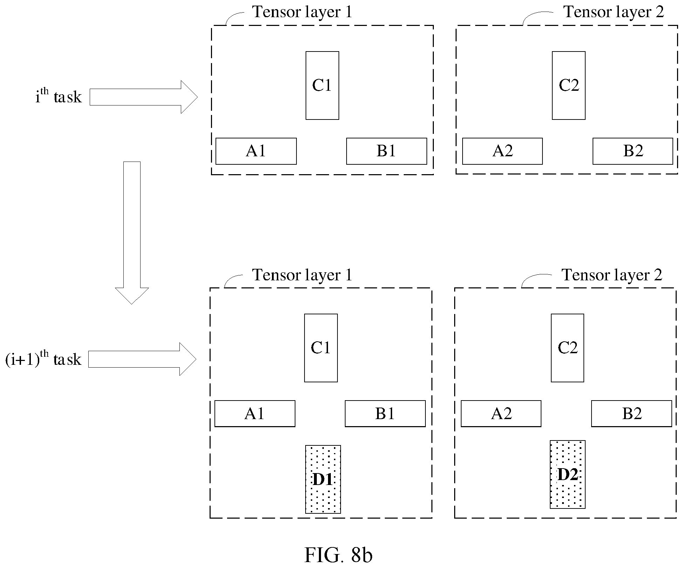

FIG. 8b corresponds to the second manner. After the training of the i$^{th}$ task ends, the first neural network includes three tensor cores and two tensor layers. In the training process of the (i+1)$^{th}$ task, one tensor core (D1+D2) is added, and a parameter in the added tensor core is updated, as shown by a shadow part in FIG. 8b.

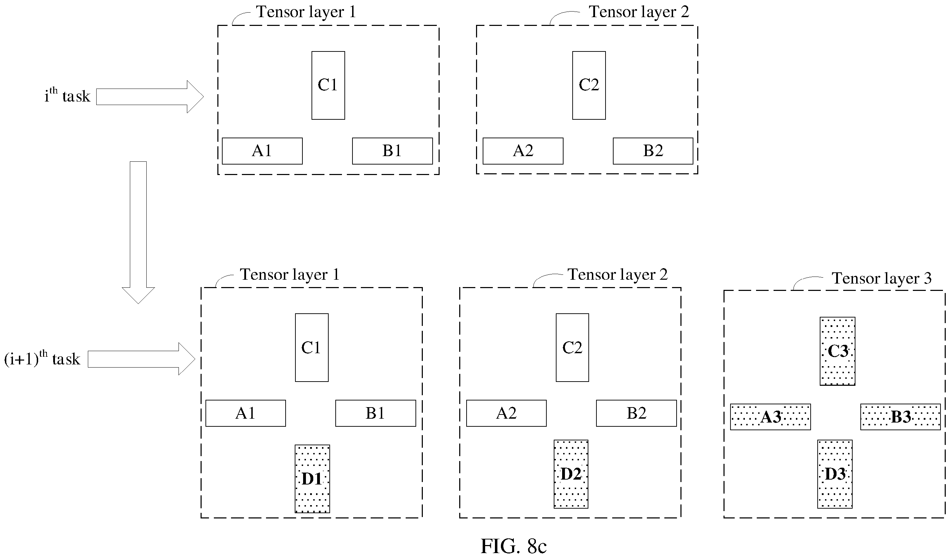

FIG. 8c corresponds to the third manner. After the training of the i$^{th}$ task ends, the first neural network includes three tensor cores and two tensor layers. In the training process of the (i+1)$^{th}$ task, one tensor core (D1+D2+D3) and one tensor layer (A3, B3, and C3+D3) are added, and parameters in the added tensor core and at the added tensor layer are updated, as shown by a shadow part in FIG. 8c.

Optionally, in the training process, of the (i+1)$^{th}$ task, performed in a manner of increasing the tensor core (that is, the foregoing second manner), loss functions in the training processes of the i$^{th}$ task and the (i+1)$^{th}$ task are as follows:

The loss function of the i$^{th}$ task is:

$$L_1 = \left\| Y - f\left(\mathrm{rank}_r\left[A \odot B \odot C ... \odot ...\right]; X\right) \right\|_2^2$$

$L_1$ is a value of the loss function; $Y$ is a label; $X$ is input data; $f$ is an output of the first neural network; rank is a rank; $A$, $B$, and $C$ are tensor cores; and $\odot$ represents a tensor inner product.

The loss function of the (i+1)th task is:

$$L_2 = \left\| Y - f(A \odot B \odot C \ldots \odot F \ldots; X) \right\|_2^2$$

$L_2$ is a value of the loss function; $Y$ is a label, $X$ is input data; $f$ is an output of the first neural network; rank is a rank; $A$, $B$, C, and $F$ are tensor cores; and $\odot$ represents a tensor inner product.

A weight parameter of a tensor network is:

$$W = A \odot B \odot C \ldots \odot F$$

The continual learning method in this application includes two implementations:

(1) In a training process of a new task, add a new tensor core and/or a new tensor layer, and update a parameter in the added tensor core and/or a parameter at the added tensor layer.

Specifically, in the training process of the (i+1)th task, a new tensor core and/or a new tensor layer may be added in the three manners in the foregoing embodiment, and a parameter in the added tensor core and/or a parameter at the added tensor layer are/is updated. Details are not described herein again.

Further, in this manner, in a learning process of the new task, for non-newly added tensor cores/tensor layers, parameters in all or a part of the tensor cores remain unchanged, or parameters at all or a part of the tensor layers remain unchanged.

That is, after the training of the (i+1)th task ends, a parameter in a part or all of the A tensor cores remains unchanged, or a parameter at a part or all of the B tensor layers remains unchanged.

Specifically, if the parameter in the part of the tensor cores/at the part of the tensor layers remains unchanged, update may be performed in two manners: (1) updating the parameter in the part of the tensor cores by using the tensor core as an update object; and (2) updating the parameter at the part of the tensor layers by using the tensor layer as an update object.

(2) In a training process of a new task, skip adding a new tensor core and/or a new tensor layer, and update a parameter in a part of existing tensor cores/tensor cores.

Specifically, in the training process of the new task, the tensor layer or the tensor core may be used as an update object to update the parameter in the part of tensor cores or update the parameter at the part of tensor layers.

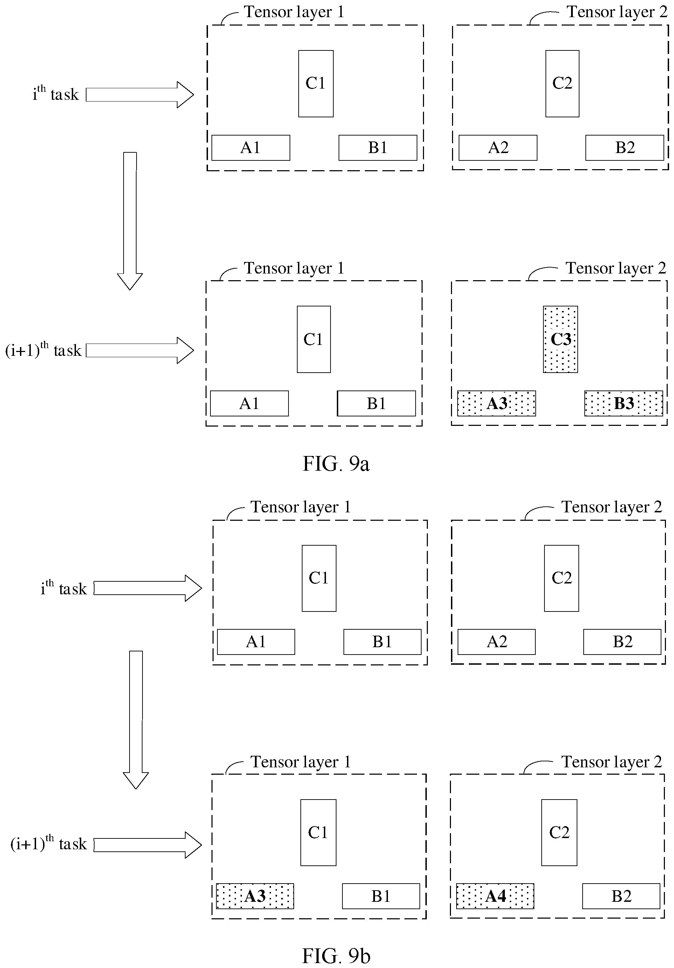

For example, as shown in FIG. 9a and FIG. 9b, two update manners in which the tensor core and the tensor layer are separately used as the update object are described.

FIG. 9a describes a manner in which the tensor layer is used as the update object. As shown in FIG. 9a, after the training of the ith task ends, the first neural network includes three tensor cores and two tensor layers. In the training process of the (i+1)th task, a parameter at a tensor layer 2 (that is, a shadow part in FIG. 9a) is updated, a parameter at a tensor layer 1 remains unchanged, and the knowledge learned from the (i+1)th task is stored by using the tensor layer 2.

FIG. 9b describes a manner in which the tensor core is used as the update object. As shown in FIG. 9b, after the training of the ith task ends, the first neural network includes three tensor cores and two tensor layers. In the training process of the (i+1)th task, a parameter in a tensor core A (that is, a shadow part in FIG. 9b, and an updated tensor core A includes A3+A4) is updated, parameters in a tensor core B and a tensor core C remain unchanged, and the knowledge learned from the (i+1)th task is stored by using the tensor core A.

Optionally, the first neural network targeted by the continual learning method in this application may be designed in two manners:

(1) The designed first neural network includes a tensor on which tensor decomposition may be performed.

Specifically, before training of each task is performed, tensor decomposition is performed on the tensor in the first neural network to obtain a plurality of tensor cores/tensor layers. Then, training is performed by using training data, to update a parameter in a part or all of the tensor cores, or update a parameter at a part or all of the tensor layers. After the training of each task ends, tensor combination is performed on the tensor cores. Specific tensor decomposition and tensor combination processes are not described in this application.

Further, according to the foregoing embodiment, after the training of the ith task ends, tensor combination is performed on the A tensor cores to obtain one or more tensors; and before the training of the (i+1)th task is performed, tensor decomposition is performed on the one or more tensors to obtain the A tensor cores.

Optionally, a manner of performing tensor decomposition includes CP decomposition, Tucker decomposition, and the like. This is not limited in this application.

(2) The designed first neural network includes at least one tensor core, and does not include a tensor on which tensor decomposition may be performed.

Specifically, during design of the first neural network, the tensor is replaced with a structure of the tensor core/a tensor layer. Therefore, in a training process of a task, tensor decomposition and tensor combination operations do not need to be performed.

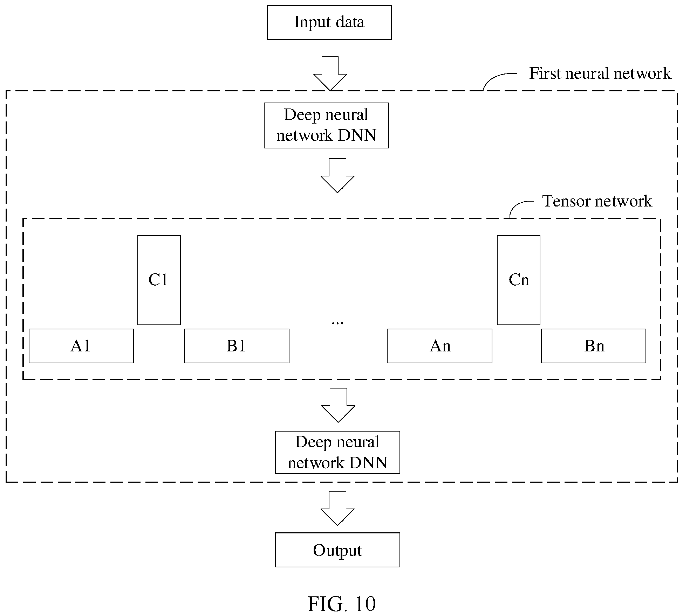

For example, refer to a structure of a first neural network shown in FIG. 10. For the first neural network represented by the structure, in a training process of each task, because the network does not include the tensor on which tensor decomposition may be performed, tensor decomposition and tensor combination operations do not need to be performed.

As shown in FIG. 10, the structure of the first neural network includes two deep neural networks (Deep Neural Networks, DNNs) and a tensor network. The tensor network includes n tensor layers. A function of a deep neural network at an input end is to perform dimension transformation on data, to meet a data processing requirement of the tensor network. A deep neural network at an output end is configured to aggregate data obtained by processing each tensor core.

Optionally, the deep neural network at the output end may alternatively be replaced with another network structure, for example, GateNet. This is not limited in this application.

Optionally, training on a new task may be performed in an alternate update manner. In an alternate training process, the first neural network is a primary model, that is, a model used for inference. In a training process of a new task each time, a backup tensor network is trained by using training data of the new task, and a parameter of a trained backup tensor network is stored.

Further, the training process of the $(i+1)^{th}$ task includes: training an $i^{th}$ backup tensor network by using an $(i+1)^{th}$ batch of datasets, to obtain a trained $i^{th}$ backup tensor network; and training the first neural network by using the $(i+1)^{th}$ batch of datasets. A loss function of the first neural network includes a degree of difference between an output of the first neural network and an output of a trained $j^{th}$ backup tensor network, or a loss function of the first neural network includes a degree of difference between a model parameter of the first neural network and a model parameter of a trained $j^{th}$ backup tensor network. j is equal to 1 to i-1, and j is a positive integer less than or equal to i-1.

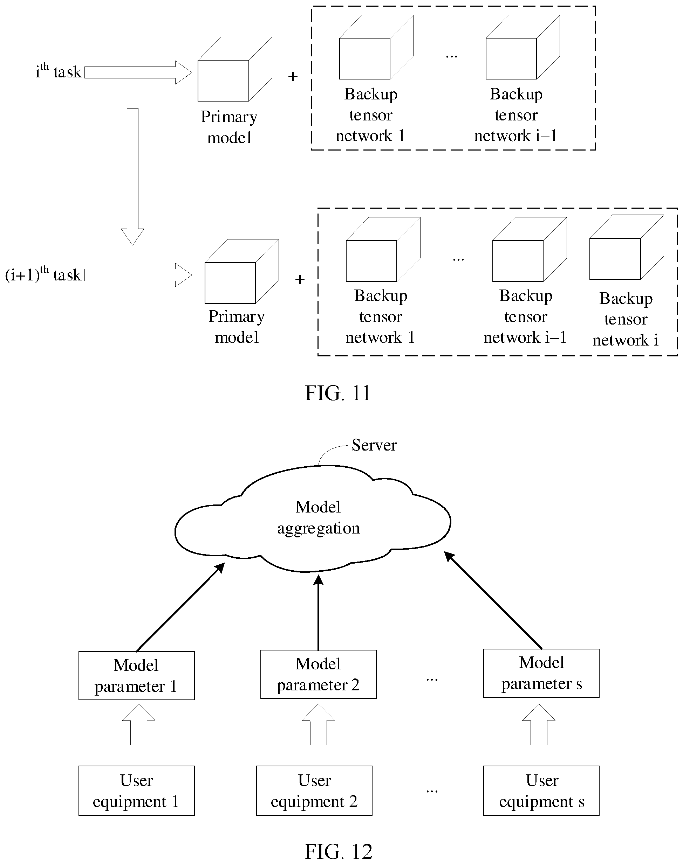

Specifically, refer to FIG. 11. In the training process of the $(i+1)^{th}$ task, the $i^{th}$ backup tensor network is first trained by using training data of the $(i+1)^{th}$ task. In this case, after learning of previous i tasks, i-1 backup tensor networks have been trained. In a process of training the primary model (namely, the first neural network) by using the training data of the $(i+1)^{th}$ task, the trained i-1 backup tensor networks are used to constrain update of a parameter in the primary model.

Further, two loss functions may be used to train the primary model: (1) the loss function including the difference between the output of the primary model and the output of the trained $j^{th}$ backup tensor network, where j is equal to 1 to i-1; and (2) the loss function including the difference between the model parameter of the primary model and the model parameter of the trained $j^{th}$ backup tensor network.

Optionally, in the training process of the $(i+1)^{th}$ task, a specific form of the first loss function may be as follows:

$$L = l(\theta;D) + \left\| f(\theta) - f_1[(A \odot B \odot C ... \odot F ...; D)] \right\|_2^2 + ... + \left\| f(\theta) - f_{i-1}[(A \odot B \odot C ... \odot F ...; D)] \right\|_2^2$$

L is a value of the loss function; $\theta$ is the primary model; l is a difference between the output of the primary model and a label; $f(\theta)$ is the output of the primary model; rank is a rank; A, B, C, and F are tensor cores; $f_1$ and $f_{i-1}$ are outputs of a first backup tensor network and an $(i-1)^{th}$ backup tensor network; and D is the training data of the $(i+1)^{th}$ task.

Optionally, in the training process of the $(i+1)^{th}$ task, a specific form of the second loss function may be as follows:

$$L = l(\theta;D) + \left\| f(\theta) - f_1[(A \odot B \odot C ... \odot F ...; D)] \right\|_2^2 + ... + \left\| f(\theta) - f_{i-1}[(A \odot B \odot C ... \odot F ...; D)] \right\|_2^2$$

For a physical meaning of each parameter, refer to the foregoing description. Details are not described herein again.

Optionally, the continual learning method may be applied to a federated learning architecture.

Specifically, the first neural network is one of a plurality of neural networks, the plurality of neural networks are located on different user equipments, and the first neural network is located on a first user equipment. In other words, the training of the first neural network is a process on the user equipment.

Further, after training of each task ends, the first user equipment sends the model parameter of the first neural network to a server, so that the server updates a second neural network on the server based on a model parameter of each of the plurality of neural networks. The model parameter of the first neural network includes the tensor core included in the first neural network.

Specifically, as shown in FIG. 12, the federated learning architecture includes the server and s user equipments. A continual learning process on each user equipment may be the same as that described in the foregoing embodiments, and details are not described herein again. After each user equipment completes training of the new task, updated model parameters (to be specific, a model parameter 1, a model parameter 2, ..., and a model parameter s) are separately sent to the server, and the server updates a neural network (namely, the second neural network in the foregoing embodiment) on the server by using all the received model parameters.

Optionally, a loss function used during model aggregation on the server is as follows:

$$L = \sum_{i=1}^{s} \min \left\{ f(\theta) + \frac{\lambda}{2} \left\| \theta - rank_i [A \odot B \odot C \ldots \odot F] \right\|_2^2 \right\}$$

$L$ is a total loss; $i$ is a model parameter on an $i^{th}$ user equipment; and $\lambda$ is a constraint strength parameter. For other variables, refer to the descriptions in the foregoing formula, and details are not described herein again.

Optionally, the task includes image recognition, target detection, image segmentation, or speech semantic recognition.

Specifically, a task used by the continual learning method in this application for learning includes but is not limited to image recognition, target detection, image segmentation, speech semantic recognition, or the like.

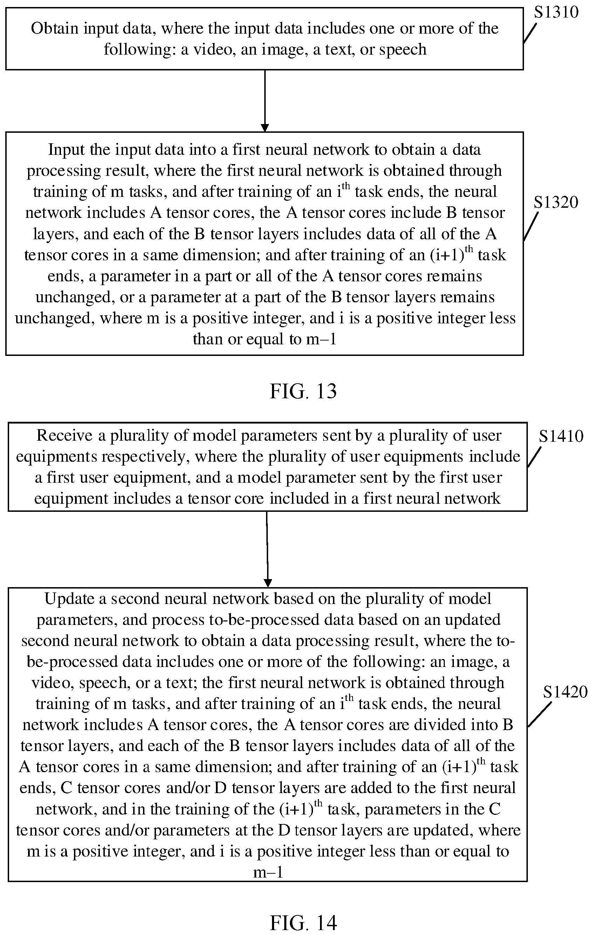

FIG. 13 is a schematic flowchart of another continual learning method according to an embodiment of this application. The method includes step S1310 and step S1320.

Step S1310: Obtain input data, where the input data includes one or more of the following: a video, an image, a text, or speech.

Step S1320: Input the input data into a first neural network to obtain a data processing result.

The first neural network is obtained through training of m tasks. After training of an $i^{th}$ task ends, the neural network includes A tensor cores, the A tensor cores include B tensor layers, and each of the B tensor layers includes data of all of the A tensor cores in a same dimension. After training of an $(i+1)^{th}$ task ends, a parameter in a part or all of the A tensor cores remains unchanged, or a parameter at a part of the B tensor layers remains unchanged. m is a positive integer, and i is a positive integer less than or equal to m-1.

Optionally, after the training of the $(i+1)^{th}$ task ends, C tensor cores and/or D tensor layers are added to the first neural network. In the training of the $(i+1)^{th}$ task, parameters in the C tensor cores and/or parameters at the D tensor layers are updated.

Specifically, for a specific implementation process of the embodiment shown in FIG. 13, refer to the descriptions in the embodiment in FIG. 6. Details are not described herein again.

FIG. 14 is a schematic flowchart of still another continual learning method according to an embodiment of this application. The method includes step S1410 and step S1420.

Step S1410: Receive a plurality of model parameters sent by a plurality of user equipments respectively, where the plurality of user equipments include a first user equipment, and a model parameter sent by the first user equipment includes a tensor core included in a first neural network.

Step S1420: Update a second neural network based on the plurality of model parameters, and process to-be-processed data based on an updated second neural network to obtain a data processing result, where the to-be-processed data includes one or more of the following: a picture, a video, speech, or a text.

The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. After training of an $(i+1)^{th}$ task ends, C tensor cores and/or D tensor layers are added to the first neural network. In the training of the $(i+1)^{th}$ task, parameters in the C tensor cores and/or parameters at the D tensor layers are updated. m is a positive integer, and i is a positive integer less than or equal to m-1.

Optionally, after the training of the $(i+1)^{th}$ task ends, a parameter in a part or all of the A tensor cores remains unchanged, or a parameter at a part or all of the B tensor layers remains unchanged.

Specifically, for a specific implementation process of the embodiment shown in FIG. 14, refer to the descriptions in the embodiment in FIG. 6. Details are not described herein again.

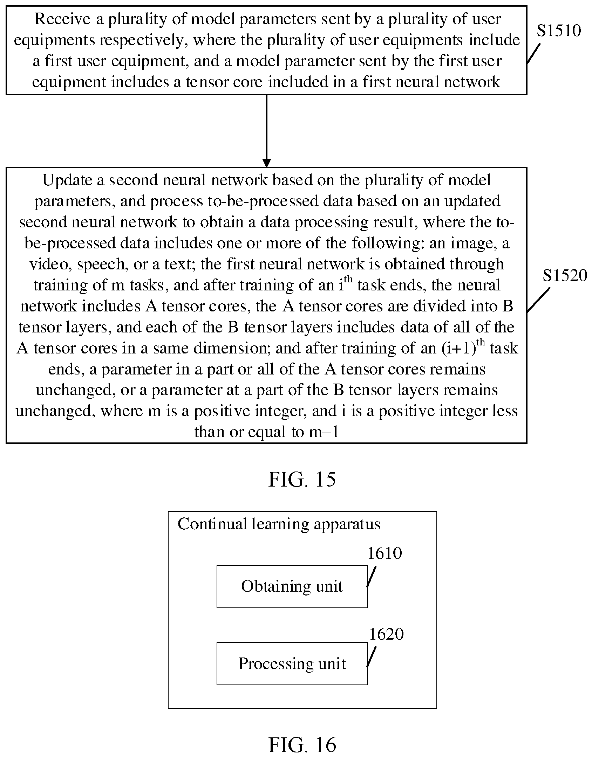

FIG. 15 is a schematic flowchart of yet another continual learning method according to an embodiment of this application. The method includes step S1510 and step S1520.

Step S1510: Receive a plurality of model parameters sent by a plurality of user equipments respectively, where the plurality of user equipments include a first user equipment, and a model parameter sent by the first user equipment includes a tensor core included in a first neural network.

Step S1520: Update a second neural network based on the plurality of model parameters, and process to-be-processed data based on an updated second neural network to obtain a data processing result, where the to-be-processed data includes one or more of the following: a picture, a video, speech, or a text.

The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. After training of an $(i+1)^{th}$ task ends, a parameter in a part or all of the A tensor cores remains unchanged, or a parameter at a part of the B tensor layers remains unchanged. m is a positive integer, and i is a positive integer less than or equal to m-1.

Specifically, for a specific implementation process of the embodiment shown in FIG. 15, refer to the descriptions in the embodiment in FIG. 6. Details are not described herein again.

FIG. 16 is a diagram of a structure of a continual learning apparatus according to an embodiment of this application. As shown in FIG. 16, the apparatus includes an obtaining unit 1610 and a processing unit 1620.

The continual learning apparatus may be configured to perform the method in the embodiment in FIG. 6, and details are as follows:

The obtaining unit 1610 is configured to obtain input data, where the input data includes one or more of the following: a video, an image, a text, or speech. The processing unit 1620 is configured to process the input data based on a first neural network to obtain a data processing result. The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. After training of an $(i+1)^{th}$ task ends, C tensor cores and/or D tensor layers are added to the first neural network. In the training of the $(i+1)^{th}$ task, parameters in the C tensor cores and/or parameters at the D tensor layers are updated. m is a positive integer, and i is a positive integer less than or equal to m-1.

In a feasible implementation, after the training of the $(i+1)^{th}$ task ends, a parameter in a part or all of the A tensor cores remains unchanged, or a parameter at a part or all of the B tensor layers remains unchanged.

In a feasible implementation, the processing unit is further configured to: after the training of the $i^{th}$ task ends, perform tensor combination on the A tensor cores to obtain one or more tensors; and before performing the training of the $(i+1)^{th}$ task, perform tensor decomposition on the one or more tensors to obtain the A tensor cores.

In a feasible implementation, in a training process of the $(i+1)^{th}$ task, the processing unit is specifically configured to: train an $i^{th}$ backup tensor network by using an $(i+1)^{th}$ batch of datasets, to obtain a trained $i^{th}$ backup tensor network; and train the first neural network by using the $(i+1)^{th}$ batch of datasets. A loss function of the first neural network includes a degree of difference between an output of the first neural network and an output of a trained $j^{th}$ backup tensor network, or a loss function of the first neural network includes a degree of difference between a model parameter of the first neural network and a model parameter of a trained $j^{th}$ backup tensor network. j is equal to 1 to i-1, and j is a positive integer less than or equal to i-1.

In a feasible implementation, the first neural network is one of a plurality of neural networks, the plurality of neural networks are located on different user equipments, the first neural network is located on a first user equipment. The apparatus further includes: a sending unit, configured by the first user equipment to: after training of each task ends, send the model parameter of the first neural network to a server, so that the server updates a second neural network on the server based on a model parameter of each of the plurality of neural networks. The model parameter of the first neural network includes the tensor core included in the first neural network.

In a feasible implementation, the task includes image recognition, target detection, image segmentation, or speech semantic recognition.

The continual learning apparatus may alternatively be configured to perform the method in the embodiment in FIG. 13, and details are as follows:

The obtaining unit 1610 is configured to obtain input data, where the input data includes one or more of the following: a video, an image, a text, or speech. The processing unit 1620 is configured to input the input data into a first neural network to obtain a data processing result. The first neural network is obtained through training of m tasks. After training of an $i^{th}$ task ends, the neural network includes A tensor cores, the A tensor cores include B tensor layers, and each of the B tensor layers includes data of all of the A tensor cores in a same dimension. After training of an $(i+1)^{th}$ task ends, a parameter in a part or all of the A tensor cores remains unchanged, or a parameter at a part of the B tensor layers remains unchanged. m is a positive integer, and i is a positive integer less than or equal to m-1.

In a feasible implementation, after the training of the $(i+1)^{th}$ task ends, C tensor cores and/or D tensor layers are added to the first neural network. In the training of the $(i+1)^{th}$ task, parameters in the C tensor cores and/or parameters at the D tensor layers are updated.

Specifically, for a specific running process of the apparatus shown in FIG. 16, refer to the foregoing corresponding method embodiment. Details are not described herein again.

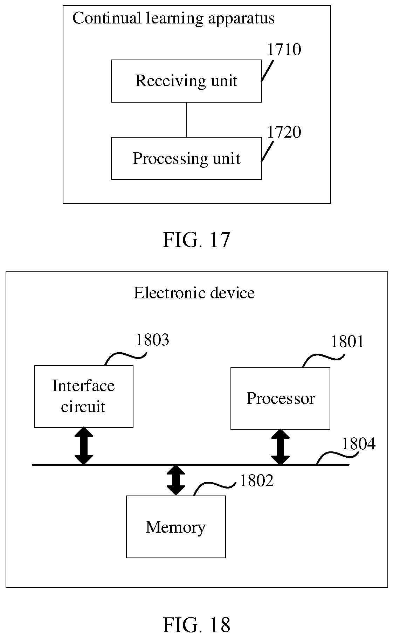

FIG. 17 is a diagram of a structure of a continual learning apparatus according to an embodiment of this application. As shown in FIG. 16, the apparatus includes a receiving unit 1710 and a processing unit 1720.

The continual learning apparatus may be configured to perform the method in the embodiment in FIG. 14, and details are as follows:

The receiving unit 1710 is configured to receive a plurality of model parameters sent by a plurality of user equipments respectively, where the plurality of user equipments include a first user equipment, and a model parameter sent by the first user equipment includes a tensor core included in a first neural network. The processing unit 1720 is configured to: update a second neural network based on the plurality of model parameters, and process to-be-processed data based on an updated second neural network to obtain a data processing result, where the to-be-processed data includes one or more of the following: a picture, a video, speech, or a text. The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. After training of an $(i+1)^{th}$ task ends, C tensor cores and/or D tensor layers are added to the first neural network. In the training of the $(i+1)^{th}$ task, parameters in the C tensor cores and/or parameters at the D tensor layers are updated. m is a positive integer, and i is a positive integer less than or equal to m-1.

In a feasible implementation, after the training of the $(i+1)^{th}$ task ends, a parameter in a part or all of the A tensor cores remains unchanged, or a parameter at a part or all of the B tensor layers remains unchanged.

The continual learning apparatus may alternatively be configured to perform the method in the embodiment in FIG. 15, and details are as follows:

The receiving unit 1710 is configured to receive a plurality of model parameters sent by a plurality of user equipments respectively, where the plurality of user equipments include a first user equipment, and a model parameter sent by the first user equipment includes a tensor core included in a first neural network. The processing unit 1720 is configured to: update a second neural network based on the plurality of model parameters, and process to-be-processed data based on an updated second neural network to obtain a data processing result, where the to-be-processed data includes one or more of the following: a picture, a video, speech, or a text. The first neural network is obtained through training of m tasks. After training of an $i^{th}$ task ends, the neural network includes A tensor cores, the A tensor cores are divided into B tensor layers, and each of the B tensor layers includes data of all of the A tensor cores in a same dimension. After training of an $(i+1)^{th}$ task ends, a parameter in a part or all of the A tensor cores remains unchanged, or a parameter at a part of the B tensor layers remains unchanged. m is a positive integer, and i is a positive integer less than or equal to m-1.

In a feasible implementation, after the training of the $(i+1)^{th}$ task ends, C tensor cores and/or D tensor layers are added to the first neural network. In the training of the $(i+1)^{th}$ task, parameters in the C tensor cores and/or parameters at the D tensor layers are updated.

Specifically, for a specific running process of the apparatus shown in FIG. 17, refer to the foregoing corresponding method embodiment. Details are not described herein again.

FIG. 18 is a diagram of a structure of an electronic device according to an embodiment of this application. As shown in FIG. 18, the device includes a processor 1801, a memory 1802, an interface circuit 1803, and a bus 1804.

When the electronic device is used as a user equipment, the interface circuit 1803 is configured to obtain input data, the processor 1801 is configured to process the input data based on a first neural network to obtain a data processing result, and the memory 1802 is configured to store the data processing result. The processor 1801, the memory 1802, and the interface circuit 1803 are interconnected through the bus 1804.

When the electronic device is used as a server, the interface circuit 1803 is configured to receive a plurality of model parameters sent by a plurality of user equipments respectively, the processor 1801 is configured to update a second neural network based on the plurality of model parameters, and process to-be-processed data based on an updated second neural network to obtain a data processing result, and the memory 1802 is configured to store the data processing result. The processor 1801, the memory 1802, and the interface circuit 1803 are interconnected through the bus 1804.

It should be understood that, for specific running processes of the processor and the memory in the electronic device in this embodiment of this application, refer to corresponding processes in the foregoing method embodiments. Details are not described herein again.

An embodiment of this application provides a chip system. The chip system includes at least one processor, memory, and interface circuit. The memory, the interface circuit, and the at least one processor are interconnected through a line. The at least one memory stores instructions. When the instructions are executed by the processor, some or all of the steps described in any one of the foregoing method embodiments are implemented.

An embodiment of this application provides a computer storage medium. The computer storage medium stores a computer program. When the computer program is executed, some or all of the steps described in any one of the foregoing method embodiments are implemented.

An embodiment of this application provides a computer program. The computer program includes instructions. When the computer program is executed by a processor, some or all of the steps described in any one of the foregoing method embodiments are implemented.

In the foregoing embodiments, the description of each embodiment has respective focuses. For a part that is not described in detail in an embodiment, reference may be made to related descriptions in other embodiments. It should be noted that, for brief description, the foregoing method embodiments are represented as a series of action combinations. However, persons skilled in the art should appreciate that this application is not limited to the described action order, because some steps may be performed in other orders or simultaneously according to this application. In addition, persons skilled in the art should also appreciate that all the embodiments described in the specification are example embodiments, and the related actions and modules are not necessarily mandatory to this application.

In several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses or units, and may be implemented in electrical or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

**Claims**

1. A tensor-based continual learning method, wherein the method comprises:

   obtaining input data, wherein the input data comprises one or more of the following: a video, an image, a text, or speech; and
   inputting the input data into a first neural network to obtain a data processing result, wherein
   the first neural network is obtained through training of m tasks, and after training of an $i^{th}$ task ends, the neural network comprises A tensor cores, the A tensor cores are divided into B tensor layers, and each of the B tensor layers comprises data of all of the A tensor cores in a same dimension; and after training of an $(i+1)^{th}$ task ends, C tensor cores and/or D tensor layers are added to the first neural network, and in the training of the $(i+1)^{th}$ task, parameters in the C tensor cores and/or parameters at the D tensor layers are updated, wherein m is a positive integer, and i is a positive integer less than or equal to m-1.

2. The method according to claim 1, wherein
   after the training of the $(i+1)^{th}$ task ends, a parameter in a part or all of the A tensor cores remains unchanged, or a parameter at a part or all of the B tensor layers remains unchanged.

3. The method according to claim 1 or 2, wherein the method further comprises:

   after the training of the $i^{th}$ task ends, performing tensor combination on the A tensor cores to obtain one or more tensors; and
   before the training of the $(i+1)^{th}$ task is performed, performing tensor decomposition on the one or more tensors to obtain the A tensor cores.

4. The method according to any one of claims 1 to 3, wherein a training process of the $(i+1)^{th}$ task comprises:

   training an $i^{th}$ backup tensor network by using an $(i+1)^{th}$ batch of datasets, to obtain a trained $i^{th}$ backup tensor network; and
   training the first neural network by using the $(i+1)^{th}$ batch of datasets, wherein a loss function of the first neural network comprises a degree of difference between an output of the first neural network and an output of a trained $j^{th}$ backup tensor network, or a loss function of the first neural network comprises a degree of difference between a model parameter of the first neural network and a model parameter of a trained $j^{th}$ backup tensor network, j is equal to 1 to i-1, and j is a positive integer less than or equal to i-1.

5. The method according to any one of claims 1 to 4, wherein the first neural network is one of a plurality of neural networks, the plurality of neural networks are located on different user equipments, the first neural network is located on a first user equipment, and the method further comprises:
   after training of each task ends, sending, by the first user equipment, the model parameter of the first neural network to a server, so that the server updates a second neural network on the server based on a model parameter of each of the plurality of neural networks, wherein the model parameter of the first neural network comprises the tensor core comprised in the first neural network.

6. The method according to any one of claims 1 to 5, wherein
the task comprises image recognition, target detection, image segmentation, or speech semantic recognition.

7. A tensor-based continual learning method, wherein the method comprises:

obtaining input data, wherein the input data comprises one or more of the following: a video, an image, a text, or speech; and
inputting the input data into a first neural network to obtain a data processing result, wherein
the first neural network is obtained through training of m tasks, and after training of an $i^{th}$ task ends, the neural network comprises A tensor cores, the A tensor cores comprise B tensor layers, and each of the B tensor layers comprises data of all of the A tensor cores in a same dimension; and after training of an $(i+1)^{th}$ task ends, a parameter in a part or all of the A tensor cores remains unchanged, or a parameter at a part of the B tensor layers remains unchanged, wherein m is a positive integer, and i is a positive integer less than or equal to m-1.

8. The method according to claim 7, wherein
after the training of the $(i+1)^{th}$ task ends, C tensor cores and/or D tensor layers are added to the first neural network, and in the training of the $(i+1)^{th}$ task, parameters in the C tensor cores and/or parameters at the D tensor layers are updated.

9. A tensor-based continual learning method, wherein the method comprises:

receiving a plurality of model parameters sent by a plurality of user equipments respectively, wherein the plurality of user equipments comprise a first user equipment, and a model parameter sent by the first user equipment comprises a tensor core comprised in a first neural network; and
updating a second neural network based on the plurality of model parameters, and processing to-be-processed data based on an updated second neural network to obtain a data processing result, wherein the to-be-processed data comprises one or more of the following: a picture, a video, speech, or a text; and
the first neural network is obtained through training of m tasks, and after training of an $i^{th}$ task ends, the neural network comprises A tensor cores, the A tensor cores are divided into B tensor layers, and each of the B tensor layers comprises data of all of the A tensor cores in a same dimension; and after training of an $(i+1)^{th}$ task ends, C tensor cores and/or D tensor layers are added to the first neural network, and in the training of the $(i+1)^{th}$ task, parameters in the C tensor cores and/or parameters at the D tensor layers are updated, wherein m is a positive integer, and i is a positive integer less than or equal to m-1.

10. The method according to claim 9, wherein
after the training of the $(i+1)^{th}$ task ends, a parameter in a part or all of the A tensor cores remains unchanged, or a parameter at a part or all of the B tensor layers remains unchanged.

11. A tensor-based continual learning method, wherein the method comprises:

receiving a plurality of model parameters sent by a plurality of user equipments respectively, wherein the plurality of user equipments comprise a first user equipment, and a model parameter sent by the first user equipment comprises a tensor core comprised in a first neural network; and
updating a second neural network based on the plurality of model parameters, and processing to-be-processed data based on an updated second neural network to obtain a data processing result, wherein the to-be-processed data comprises one or more of the following: a picture, a video, speech, or a text; and
the first neural network is obtained through training of m tasks, and after training of an $i^{th}$ task ends, the neural network comprises A tensor cores, the A tensor cores are divided into B tensor layers, and each of the B tensor layers comprises data of all of the A tensor cores in a same dimension; and after training of an $(i+1)^{th}$ task ends, a parameter in a part or all of the A tensor cores remains unchanged, or a parameter at a part of the B tensor layers remains unchanged, wherein m is a positive integer, and i is a positive integer less than or equal to m-1.

12. The method according to claim 11, wherein
after the training of the $(i+1)^{th}$ task ends, C tensor cores and/or D tensor layers are added to the first neural network, and in the training of the $(i+1)^{th}$ task, parameters in the C tensor cores and/or parameters at the D tensor layers are updated.

13. A tensor-based continual learning apparatus, wherein the apparatus comprises:

an obtaining unit, configured to obtain input data, wherein the input data comprises one or more of the following: a video, an image, a text, or speech; and
a processing unit, configured to process the input data based on a first neural network to obtain a data processing result, wherein
the first neural network is obtained through training of m tasks, and after training of an $i^{th}$ task ends, the neural network comprises A tensor cores, the A tensor cores are divided into B tensor layers, and each of the B tensor layers comprises data of all of the A tensor cores in a same dimension; and after training of an $(i+1)^{th}$ task ends, C tensor cores and/or D tensor layers are added to the first neural network, and in the training of the $(i+1)^{th}$ task, parameters in the C tensor cores and/or parameters at the D tensor layers are updated, wherein m is a positive integer, and i is a positive integer less than or equal to m-1.

14. The apparatus according to claim 13, wherein
after the training of the $(i+1)^{th}$ task ends, a parameter in a part or all of the A tensor cores remains unchanged, or a parameter at a part or all of the B tensor layers remains unchanged.

15. The apparatus according to claim 13 or 14, wherein the processing unit is further configured to:

after the training of the $i^{th}$ task ends, perform tensor combination on the A tensor cores to obtain one or more tensors; and
before performing the training of the $(i+1)^{th}$ task, perform tensor decomposition on the one or more tensors to obtain the A tensor cores.

16. The apparatus according to any one of claims 13 to 15, wherein in a training process of the $(i+1)^{th}$ task, the processing unit is specifically configured to:

train an $i^{th}$ backup tensor network by using an $(i+1)^{th}$ batch of datasets, to obtain a trained $i^{th}$ backup tensor network; and
train the first neural network by using the $(i+1)^{th}$ batch of datasets, wherein a loss function of the first neural network comprises a degree of difference between an output of the first neural network and an output of a trained $j^{th}$ backup tensor network, or a loss function of the first neural network comprises a degree of difference between a model parameter of the first neural network and a model parameter of a trained $j^{th}$ backup tensor network, j is equal to 1 to i-1, and j is a positive integer less than or equal to i-1.

17. The apparatus according to any one of claims 13 to 16, wherein the first neural network is one of a plurality of neural networks, the plurality of neural networks are located on different user equipments, the first neural network is located on a first user equipment, and the apparatus further comprises:

a sending unit, configured by the first user equipment to: after training of each task ends, send the model parameter of the first neural network to a server, so that the server updates a second neural network on the server based on a model parameter of each of the plurality of neural networks, wherein
the model parameter of the first neural network comprises the tensor core comprised in the first neural network.

18. The apparatus according to any one of claims 13 to 17, wherein the task comprises image recognition, target detection, image segmentation, or speech semantic recognition.

19. A tensor-based continual learning apparatus, wherein the apparatus comprises:

an obtaining unit, configured to obtain input data, wherein the input data comprises one or more of the following: a video, an image, a text, or speech; and
a processing unit, configured to input the input data into a first neural network to obtain a data processing result, wherein
the first neural network is obtained through training of m tasks, and after training of an $i^{th}$ task ends, the neural network comprises A tensor cores, the A tensor cores comprise B tensor layers, and each of the B tensor layers comprises data of all of the A tensor cores in a same dimension; and after training of an $(i+1)^{th}$ task ends, a parameter in a part or all of the A tensor cores remains unchanged, or a parameter at a part of the B tensor layers remains unchanged, wherein m is a positive integer, and i is a positive integer less than or equal to m-1.

20. The apparatus according to claim 19, wherein
after the training of the $(i+1)^{th}$ task ends, C tensor cores and/or D tensor layers are added to the first neural network, and in the training of the $(i+1)^{th}$ task, parameters in the C tensor cores and/or parameters at the D tensor layers are updated.

21. A tensor-based continual learning apparatus, wherein the apparatus comprises:

a receiving unit, configured to receive a plurality of model parameters sent by a plurality of user equipments respectively, wherein the plurality of user equipments comprise a first user equipment, and a model parameter sent by the first user equipment comprises a tensor core comprised in a first neural network; and
a processing unit, configured to: update a second neural network based on the plurality of model parameters, and process to-be-processed data based on an updated second neural network to obtain a data processing result, wherein the to-be-processed data comprises one or more of the following: a picture, a video, speech, or a text; and the first neural network is obtained through training of m tasks, and after training of an $i^{th}$ task ends, the neural network comprises A tensor cores, the A tensor cores are divided into B tensor layers, and each of the B tensor layers comprises data of all of the A tensor cores in a same dimension; and after training of an $(i+1)^{th}$ task ends, C tensor cores and/or D tensor layers are added to the first neural network, and in the training of the $(i+1)^{th}$ task, parameters in the C tensor cores and/or parameters at the D tensor layers are updated, wherein m is a positive integer, and i is a positive integer less than or equal to m-1.

22. The apparatus according to claim 21, wherein
after the training of the $(i+1)^{th}$ task ends, a parameter in a part or all of the A tensor cores remains unchanged, or a parameter at a part or all of the B tensor layers remains unchanged.

23. A tensor-based continual learning apparatus, wherein the apparatus comprises:

a receiving unit, configured to receive a plurality of model parameters sent by a plurality of user equipments respectively, wherein the plurality of user equipments comprise a first user equipment, and a model parameter sent by the first user equipment comprises a tensor core comprised in a first neural network; and
a processing unit, configured to: update a second neural network based on the plurality of model parameters, and process to-be-processed data based on an updated second neural network to obtain a data processing result, wherein the to-be-processed data comprises one or more of the following: a picture, a video, speech, or a text; and the first neural network is obtained through training of m tasks, and after training of an $i^{th}$ task ends, the neural network comprises A tensor cores, the A tensor cores are divided into B tensor layers, and each of the B tensor layers comprises data of all of the A tensor cores in a same dimension; and after training of an $(i+1)^{th}$ task ends, a parameter in a part or all of the A tensor cores remains unchanged, or a parameter at a part of the B tensor layers remains unchanged, wherein m is a positive integer, and i is a positive integer less than or equal to m-1.

24. The apparatus according to claim 23, wherein
after the training of the $(i+1)^{th}$ task ends, C tensor cores and/or D tensor layers are added to the first neural network, and in the training of the $(i+1)^{th}$ task, parameters in the C tensor cores and/or parameters at the D tensor layers are updated.

25. An electronic device, wherein the electronic device comprises at least one processor, memory, and interface circuit, the memory, the interface circuit, and the at least one processor are interconnected through a line, the at least one memory stores instructions, and when the instructions are executed by the processor, the method according to any one of claims 1 to 12 is implemented.

26. A computer-readable storage medium, wherein the computer-readable storage medium stores a computer program, and when the computer program is executed, the method according to any one of claims 1 to 12 is implemented.

FIG. 1a

Interaction interface

Speech/Query statement/Text...

Memory

Processor

Data training/Machine learning/Deep learning

Search/Inference/ Decision-making

...

Data processing device 120 (server)

13:21

User equipment 110

EP 4 524 819 A1

| User | User equipment 110 |
|---|---|

**Interaction interface**

Speech/Query statement/Text...

Memory

Processor:

| Data training/Machine learning/Deep learning | Search/Inference/ Decision-making | ... |

User equipment 110

FIG. 1b

Execution device 210

Data storage system 250

Communication network

Local device 301

Local device 302

For example

FIG. 1c

FIG. 2

Output layer
140

Hidden layer n
13n

Hidden layer 2
132

Hidden layer 1
131

Neural
network
layer
130

Convolutional
neural network
(CNN)
100

126

125

124

123

122

121

Convolutional
layer/Pooling
layer
120

Input layer
110

Video/Text

FIG. 3

FIG. 4

FIG. 5

Obtain input data, where the input data includes one or more of the following: a video, an image, a text, or speech

S610

Input the input data into a first neural network to obtain a data processing result, where the first neural network is obtained through training of m tasks, and after training of an $i^{th}$ task ends, the neural network includes A tensor cores, the A tensor cores are divided into B tensor layers, and each of the B tensor layers includes data of all of the A tensor cores in a same dimension; and after training of an $(i+1)^{th}$ task ends, C tensor cores and/or D tensor layers are added to the first neural network, and in the training of the $(i+1)^{th}$ task, parameters in the C tensor cores and/or parameters at the D tensor layers are updated, where m is a positive integer, and i is a positive integer less than or equal to m–1

S620

FIG. 6

Tensor core C

Tensor layer 1    Tensor layer 2

C1    C2

A1    B1    A2    B2

Tensor core A    Tensor core B

FIG. 7

FIG. 8a

FIG. 8b

FIG. 8c

Tensor layer 1

$i^{th}$ task

C1

A1    B1

Tensor layer 2

C2

A2    B2

Tensor layer 1

$(i+1)^{th}$ task

C1

A1    B1

Tensor layer 2

**C3**

**A3**    **B3**

FIG. 9a

Tensor layer 1

$i^{th}$ task

C1

A1    B1

Tensor layer 2

C2

A2    B2

Tensor layer 1

$(i+1)^{th}$ task

C1

**A3**    B1

Tensor layer 2

C2

**A4**    B2

FIG. 9b

Input data

First neural network

Deep neural
network DNN

Tensor network

C1

Cn

A1

B1

...

An

Bn

Deep neural
network DNN

Output

FIG. 10

FIG. 11

FIG. 12

Obtain input data, where the input data includes one or more of the following: a video, an image, a text, or speech

S1310

Input the input data into a first neural network to obtain a data processing result, where the first neural network is obtained through training of m tasks, and after training of an $i^{th}$ task ends, the neural network includes A tensor cores, the A tensor cores include B tensor layers, and each of the B tensor layers includes data of all of the A tensor cores in a same dimension; and after training of an $(i+1)^{th}$ task ends, a parameter in a part or all of the A tensor cores remains unchanged, or a parameter at a part of the B tensor layers remains unchanged, where m is a positive integer, and i is a positive integer less than or equal to m–1

S1320

FIG. 13

Receive a plurality of model parameters sent by a plurality of user equipments respectively, where the plurality of user equipments include a first user equipment, and a model parameter sent by the first user equipment includes a tensor core included in a first neural network

S1410

Update a second neural network based on the plurality of model parameters, and process to-be-processed data based on an updated second neural network to obtain a data processing result, where the to-be-processed data includes one or more of the following: an image, a video, speech, or a text; the first neural network is obtained through training of m tasks, and after training of an $i^{th}$ task ends, the neural network includes A tensor cores, the A tensor cores are divided into B tensor layers, and each of the B tensor layers includes data of all of the A tensor cores in a same dimension; and after training of an $(i+1)^{th}$ task ends, C tensor cores and/or D tensor layers are added to the first neural network, and in the training of the $(i+1)^{th}$ task, parameters in the C tensor cores and/or parameters at the D tensor layers are updated, where m is a positive integer, and i is a positive integer less than or equal to m–1

S1420

FIG. 14

| Receive a plurality of model parameters sent by a plurality of user equipments respectively, where the plurality of user equipments include a first user equipment, and a model parameter sent by the first user equipment includes a tensor core included in a first neural network | S1510 |

| Update a second neural network based on the plurality of model parameters, and process to-be-processed data based on an updated second neural network to obtain a data processing result, where the to-be-processed data includes one or more of the following: an image, a video, speech, or a text; the first neural network is obtained through training of m tasks, and after training of an $i^{th}$ task ends, the neural network includes A tensor cores, the A tensor cores are divided into B tensor layers, and each of the B tensor layers includes data of all of the A tensor cores in a same dimension; and after training of an $(i+1)^{th}$ task ends, a parameter in a part or all of the A tensor cores remains unchanged, or a parameter at a part of the B tensor layers remains unchanged, where m is a positive integer, and i is a positive integer less than or equal to m−1 | S1520 |

FIG. 15

Continual learning apparatus

Obtaining unit 1610

Processing unit 1620

FIG. 16

Continual learning apparatus

Receiving unit 1710

Processing unit 1720

FIG. 17

Electronic device

Interface circuit 1803

Processor 1801

1804

1802

Memory

FIG. 18

## INTERNATIONAL SEARCH REPORT

| International application No. |
| --- |
| **PCT/CN2023/096249** |

**A. CLASSIFICATION OF SUBJECT MATTER**

G06N3/08(2023.01)i; G06N3/04(2023.01)i; G06N20/00(2019.01)i

According to International Patent Classification (IPC) or to both national classification and IPC

**B. FIELDS SEARCHED**

Minimum documentation searched (classification system followed by classification symbols)

IPC: G06N,G06K,G06V

Documentation searched other than minimum documentation to the extent that such documents are included in the fields searched

Electronic data base consulted during the international search (name of data base and, where practicable, search terms used)

CNTXT; ENTXT; CNABS; DWPI; VEN; CNKI: tensor, continuous learning, continual learning, life-long learning, core, layer, forgetting, trainning, 张量, 持续学习, 核, 层, 遗忘, 忘记, 训练

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115169548 A (HUAWEI TECHNOLOGIES CO., LTD.) 11 October 2022 (2022-10-11) description, paragraphs [0002]-[0231], figures 1-18, and claims 1-26 | 1-26 |
| A | CN 114463605 A (SUN YAT-SEN UNIVERSITY) 10 May 2022 (2022-05-10) see entire document | 1-26 |
| A | CN 113792874 A (TSINGHUA UNIVERSITY) 14 December 2021 (2021-12-14) see entire document | 1-26 |
| A | CN 113095486 A (TSINGHUA UNIVERSITY) 09 July 2021 (2021-07-09) see entire document | 1-26 |
| A | US 2019080222 A1 (GLESNER YONATAN; NOVIK GAL; VAINBRAND DMITRI; LEIBOVICH GAL;) 14 March 2019 (2019-03-14) see entire document | 1-26 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 July 2023** | **24 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" align="center">**INTERNATIONAL SEARCH REPORT**<br>**Information on patent family members**</td><td colspan="2">International application No.<br>**PCT/CN2023/096249**</td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td>CN 115169548 A</td><td>11 October 2022</td><td>None</td><td></td></tr>
<tr><td>CN 114463605 A</td><td>10 May 2022</td><td>CN 114463605 B</td><td>12 August 2022</td></tr>
<tr><td>CN 113792874 A</td><td>14 December 2021</td><td>None</td><td></td></tr>
<tr><td>CN 113095486 A</td><td>09 July 2021</td><td>None</td><td></td></tr>
<tr><td>US 2019080222 A1</td><td>14 March 2019</td><td>US 11055604 B2<br>US 2022027704 A1</td><td>06 July 2021<br>27 January 2022</td></tr>
</table>

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210618700